# EUROPEAN PATENT APPLICATION

(11) **EP 1 615 218 A2**
(43) Date of publication of application: **11.01.2006**
(21) Application number: 05254197.6
(22) Date of filing: 04.07.2005
(51) Int. Cl.: G11B 20/10, G11B 27/11

(54) **Content recording apparatus, content playback apparatus content recording method, content playback method, computer program and system**

(30) Priority: 09.07.2004 JP 2004203030
(71) Applicant: SONY CORPORATION, Tokyo 141 (JP)
(72) Inventor: Nakamura, Shigeki, c/o Sony Corporation, Tokyo 141 (JP)
(74) Representative: Mills, Julia

(57) **Abstract**

A content recording apparatus for communicating with a content playback apparatus via a network, includes a first receiver for receiving, from the content playback apparatus, information related to a content segment to be received by the content playback apparatus, the content segment being a portion of a single content, an attaching unit for attaching, to the content segment, a content identification identifying the content segment based on the received related information, a second receiver for receiving, from the content playback apparatus, the content segment received by the content playback apparatus, a recorder for recording the received content segment with both the content identification and the related information associated with the received content segment, and a synthesizer for synthesizing, into the single content, content segments having the same content identification.

## Description

The present invention contains subject matter related to Japanese Patent Application JP 2004-203030 filed in the Japanese Patent Office on July 9, 2004 entire contents of which are incorporated herein by reference.

The present invention relates to the field of content recording apparatus, content playback apparatus, content recording methods, content playback methods, computer programs for recording and playing back contents such as moving images and music of broadcast programs and systems for recording and playing back.

The networking of audio-visual (AV) apparatuses containing digital television (DTV) and hard disk drive (HDD), and digital versatile disk (DVD) drive is currently in progress. Most of the networked AV apparatuses receive program scheduling and remote control operation input on a personal computer (PC) connected to a network.

Networked recorders having moving picture experts group (MPEG) 2 encoder encodes a content recorded thereon into a stream at a compression rate appropriate for network transmission, and transmits the stream to a PC or an AV apparatus having a content playback function, each connected to a network for playback as disclosed in Japanese Unexamined Patent Application Publication No. 2002-112220.

A series of functions from inputting a stream of a content to reception and recording of the content is performed by a recorder. A new recorder must be introduced to increase the number of concurrently recorded programs or to introduce a new broadcast format. To increase the overall record capacity of a plurality of recorders, the hard disk drive in each recorder needs to be replaced with the one having a larger storage capacity.

A user may wish to view another program in the middle of receiving and recording a stream of a given program on a recorder. Busy with receiving and recording the stream of the program, the recorder is unable to stream play back the other program. The user thus miss the chance of viewing the other program.

Even a desired program cannot be recorded if only available one recorder malfunctions in the middle of recording the program.

It is thus desirable to provide a content recording apparatus, a content playback apparatus, a content recording method, a content playback method, and a computer program for increasing the degree of freedom in expansion and interchange of a system and assuring parallel running of a plurality functions and redundancy of the system.

Various respective aspects of the present invention are set out in the appended claims.

In accordance with one embodiment of the present invention, a content recording apparatus for communicating with a content playback apparatus via a network, includes a first receiving unit for receiving, from the content playback apparatus, information related to a content segment to be received by the content playback apparatus, the content segment being a portion of a single content, an attaching unit for attaching, to the content segment, a content identification identifying the content segment based on the received related information, a second receiving unit for receiving, from the content playback apparatus, the content segment received by the content playback apparatus, a recording unit for recording the received content segment with both the content identification and the related information associated with the received content segment, and a synthesizer for synthesizing, into the single content, content segments having the same content identification from among a plurality of content segments if the plurality of content segments are recorded.

The content refers to moving images and music in a broadcast program delivered via a network. The single content refers to a complete content, such as a single broadcast program. The content segment refers to a portion of the single content, and a plurality content segments form the single content. The content segment can be a single whole content.

A plurality of content segments are identified by a content identification (ID). Different content segments having the same content ID are learned. The content segments transmitted non-continuously from the content playback apparatus are individually recorded, and then synthesized into a single content.

When receiving and recording a program, a single content playback apparatus segments the program into content segments at timings of commercials (CMs). The content playback apparatus can thus perform commercial cutting. If a plurality of content playback apparatuses are available, a program is segmented into a plurality of content segments according to a predetermined broadcast time, and the content segments are thus received from the respective content playback apparatuses. The content segments are then recorded in relay recording. In the relay recording, each content playback apparatus is free from a long-time busy state. The workload on the content playback apparatus for recording is lightened. With this arrangement, a user who may wish to view a program on a real-time basis can view the program.

The content recording apparatus may include a first transmitting unit for transmitting the single synthesized content to the content playback apparatus for playback. The content playback apparatus thus plays back the received content segments as a single content.

The content recording apparatus may further includes a second transmitting unit for transmitting the attached content identification to the content playback apparatus, and a third receiving unit for receiving, from the content playback apparatus, a transmission request to transmit the single synthesized content, together with the content identification, wherein the second transmitting unit transmits the single content corresponding to the received identification in response to the transmission request. A user thus identifies a single content by the content ID. By transmitting the content ID from the content playback apparatus, the user can view a desired content at any desired time.

In the content recording apparatus, the second receiving unit may receive the content segment from a plurality of content playback apparatuses, and the synthesizer includes a unit for determining, based on the related information corresponding to each recorded content segment, whether overlapping portions are present among the content segments, and a unit for deleting the overlapping portions of the other content segments with the overlapping portion on one content segment selected if the determining unit determines that the overlapping portions are presented among the content segments.

The single content can be a television program to be broadcast from 1:00 to 2:00, for example. If content segments from 1:00 to 1:20, from 1:15 to 1:40, and from 1:30 to 2:00 are received from content playback apparatuses, the content segments are synthesized with overlapping portions from 1:15 to 1:20 and 1:30 to 1:40 deleted. Even if an overlapping portion is present in each content segment, a continuous single content is synthesized. The content playback apparatuses holds the same contents as the content segments to assure redundancy, and may later store one content with the other contents deleted.

In the content recording apparatus, the synthesizer may include a unit for prioritizing the overlapping portions in the deletion of the overlapping portions based on the related information of the content segments having the overlapping portions. The priority order may be determined based on the format and bit rate of each content segment. A content segment of moving picture expert group (MPEG) 2 may have a higher priority than a content segment of MPEG1, or a content segment having a higher bit rate may have a higher priority than a content segment having a lower bit rate. To assure consistency in synthesized content files, content segments received from the same content playback apparatus are selected and synthesized with priority.

In the content recording apparatus, the second receiving unit may receive the content segment encrypted by the content playback apparatus. The synthesizer may include a unit for transmitting the content segment to the content playback apparatus having encrypted the content segment to decrypt the content segment having the same content identification attached thereto, a unit for receiving, from the content playback apparatus, the content segment decrypted by the content playback apparatus, to update the encrypted content segment to the decrypted content segment and a unit for synthesizing the decrypted content segments.

If a user desires that the content segments forming a single content be transmitted from the same content playback apparatus and that the single content be played back by the same content playback apparatus, security of the content is guaranteed or at least increased by transmitting the single content in the encrypted form thereof. If the content segments forming the single content are transmitted from different content segments, the content segments are transmitted back to the respective content playback apparatuses for decryption in order to synthesize the content segments into the same content. Any of the content playback apparatuses can thus play back the content.

In the content recording apparatus, the single content may be a program transmitted in a predetermined time slot. The related information may contain information related to an area where the program is broadcast, information related to a channel in which the program is broadcast, information related to broadcast start time and broadcast end time of the program, and information related to reception start time and reception end time of each content segment that is received as a portion of the program by each content playback apparatus. The generating unit generates the content ID based on the area information, the channel information, the broadcast start time, and the broadcast end time. The synthesizer may synthesize the content segments in time sequence based on the reception start time and the reception end time of the content segments if the broadcast end time of the single content has come.

The area information, the channel information, the broadcast start information, and the broadcast end information are acquired from an electronic program guide (EPG). A unique content ID is attached to each content segment in the same program based on these pieces of information. By referencing the content ID, the location of the program corresponding to each content segment received from the content playback apparatus is identified. By referencing the reception start time and the reception end time of each content segment, the content segments are rearranged in time sequence to integrate content segments into the single program. The area information is used because the same program is broadcast via different channels depending on broadcast area.

A content playback apparatus of one embodiment of the present invention for communicating with a content recording apparatus via a network, includes an acquisition unit for acquiring information related to a content segment to be received as a portion of a single content, a first transmitting unit for transmitting the acquired related information to the content recording apparatus, a first receiving unit for receiving, from the content recording apparatus, a content identification that is attached to the content segment by the content recording apparatus based on the related information, a second receiving unit for receiving the content segment, a second transmitting unit for transmitting, to the content recording apparatus, the received content segment together with the content identification to be recorded onto the content recording apparatus, a third transmitting unit for transmitting, to the content recording apparatus, a transmission request to transmit a single synthesized content, together with the content identification if a plurality of content segments are recorded on the content recording apparatus and synthesized into the single content, a third receiving unit for receiving the single content that is transmitted from the content recording apparatus in response to the transmission request, and a playback unit for playing back the received signal content.

Even if own content playback apparatus receives a portion of the single content, own content playback apparatus can receive and play back the while content in the synthesized form of the content segments by transmitting the content ID to the content recording apparatus.

The content playback apparatus may further include a unit for encrypting the content segment received by the second receiving unit. The second transmitting unit transmits the encrypted content segment, and the playback unit plays back the single content by decrypting the single content. The security of the content segments on the network is thus assured or at least increased.

The content playback apparatus may further include a unit for encrypting the content segment received by the second receiving unit, the second transmitting unit transmitting the encrypted content segment, a unit for receiving, from the content recording apparatus, a decryption request to decrypt a recorded content segment, together with the content segment if the content recording apparatus records the transmitted content segment together with another content segment transmitted from another content playback apparatus connected to the network, and a unit for decrypting the content segment in response to the decryption request and returning the decrypted content segment to the content recording apparatus.

The security of the content segments is assured or at least increased by encrypting the content segments when the content segments are transmitted to the content recording apparatus. If the single synthesized content is constructed of the content segments received by the content playback apparatuses including own content playback apparatus, the content segment is decrypted and returned in response to the decryption request. Own content playback apparatus can thus play back the single content while the other content playback apparatuses can also play back the same single content.

In the content playback apparatus, the single content may be a program transmitted in a predetermined time slot, and the related information may contain information related to an area where the program is broadcast, information related to a channel in which the program is broadcast, information related to broadcast start time and broadcast end time of the program, and information related to reception start time and reception end time of each content segment that is received as a portion of the program by each content playback apparatus.

The content recording apparatus can identify the content segments when the area and channel information is transmitted to the content recording apparatus. By transmitting the content ID attached to each content segment to the content recording apparatus based on these pieces information, the synthesized program is received and viewed without the need for continuously receiving the program throughout the broadcast time.

A system of one embodiment of the present invention includes a content recording apparatus, a first content playback apparatus, and a second content playback apparatus, the apparatuses connected to each other via a network for communication. The content recording apparatus includes a unit for receiving, from each of the first and second content playback apparatuses, information related to a content segment to be received by each of the first and second playback apparatuses, the content segment being a portion of a single content, a unit for attaching, to the content segment, a content identification identifying the content segment based on the received related information, and transmitting the content identification to each of the first and second content playback apparatuses, a unit for receiving, from each of the first and second content playback apparatuses, the content segment received by each of the first and second content playback apparatuses, a unit for recording the received content segment with both the content identification and the related information associated with the received content segment, a unit for synthesizing, into the single content, content segments having the same content identification from among the recorded content segments, and a unit for transmitting the single synthesized content to each of the first and second content playback apparatuses. Each of the first and second content playback apparatuses includes a unit for acquiring the related information, a unit for transmitting the acquired related information to the content recording apparatus, a unit for receiving the content identification from the content recording apparatus, a unit for receiving the content segment, a unit for transmitting the received content segment together with the content identification to the content recording apparatus, a unit for transmitting, to the content recording apparatus, the transmission request of the single synthesized content together with the content identification, a unit for receiving the single content that is transmitted from the content recording apparatus in response to the transmission request, and a unit for playing back the single received content.

In this system, a plurality of content segments received by the content playback apparatuses and non-continuously transmitted to the content recording apparatus are recorded and managed as a single content. The single content is then played back on each content playback apparatus. Since the reception and recording of the content are split among different apparatuses, the freedom of system expansion and system interchange is increased. Since a plurality of content playback apparatuses receive content segments, system redundancy is assured.

In accordance with one embodiment of the present invention, a content recording method of a content recording apparatus communicating with a content playback apparatus via a network, includes steps of receiving, from the content playback apparatus, information related to a content segment to be received by the content playback apparatus, the content segment being a portion of a single content, attaching, to the content segment, a content identification identifying the content segment based on the received related information, receiving, from the content playback apparatus, the content segment received by the content playback apparatus, recording the received content segment with both the content identification and the related information associated with the received content segment, and synthesizing, into the single content, content segments having the same content identification from among a plurality of content segments if the plurality of content segments are recorded.

In accordance with another embodiment of the present invention, a content playback method of a content playback apparatus communicating with a content recording apparatus via a network, includes steps of acquiring information related to a content segment to be received as a portion of a single content, transmitting the acquired related information to the content recording apparatus, receiving, from the content recording apparatus, a content identification that is attached to the content segment by the content recording apparatus based on the related information, receiving the content segment, transmitting, to the content recording apparatus, the received content segment together with the content identification to be recorded onto the content recording apparatus, transmitting, to the content recording apparatus, a transmission request to transmit a single synthesized content, together with the content identification if a plurality of content segments are recorded on the content recording apparatus and synthesized into the single content, receiving the single content that is transmitted from the content recording apparatus in response to the transmission request, and playing back the received signal content.

In accordance with yet another embodiment of the present invention, a computer program for causing a content recording apparatus to communicate with a content playback apparatus via a network, includes program code for performing steps of receiving, from the content playback apparatus, information related to a content segment to be received by the content playback apparatus, the content segment being a portion of a single content, attaching, to the content segment, a content identification identifying the content segment based on the received related information, receiving, from the content playback apparatus, the content segment received by the content playback apparatus, recording the received content segment with both the content identification and the related information associated with the received content segment, and synthesizing, into the single content, content segments having the same content identification from among a plurality of content segments if the plurality of content segments are recorded.

In accordance with still another embodiment of the present invention, a computer program for causing a content playback apparatus to communicate with a content recording apparatus via a network, includes program code for performing steps of acquiring information related to a content segment to be received as a portion of a single content, transmitting the acquired related information to the content recording apparatus, receiving, from the content recording apparatus, a content identification that is attached to the content segment by the content recording apparatus based on the related information, receiving the content segment, transmitting, to the content recording apparatus, the received content segment together with the content identification to be recorded onto the content recording apparatus, transmitting, to the content recording apparatus, a transmission request to transmit a single synthesized content, together with the content identification if a plurality of content segments are recorded on the content recording apparatus and synthesized into the single content, receiving the single content that is transmitted from the content recording apparatus in response to the transmission request, and playing back the received signal content.

In accordance with embodiments of the present invention, the degree of freedom in expansion and interchange of a system is increased and parallel running of a plurality functions and redundancy of the system are assured.

The present invention will be described further, by way of example only, with reference to preferred embodiments thereof as illustrated in the accompanying drawings, in which:
Fig. 1 is a block diagram of a system of an embodiment of present invention;
Figs. 2A-2C illustrate an information processing controller in an information processing apparatus of one embodiment of the present invention;
Fig. 3 illustrates a software cell in accordance with one embodiment of the present invention;
Fig. 4 illustrates data areas of the software cell with a DMA command being a status reply command;
Fig. 5 illustrates operation of a plurality of information processing apparatuses that function as a single virtual information processing apparatus;
Fig. 6 illustrates a software structure of the information processing controller;
Fig. 7 illustrates operation of four information processing apparatuses that function as a single virtual information processing apparatus;
Fig. 8 illustrates an example distributed process of the system of Fig. 7;
Fig. 9 illustrates the structure of an AV network system in accordance with one embodiment of the present invention;
Fig. 10 illustrates the hardware structure of a home server;
Fig. 11 illustrates the hardware structure of the home server;
Fig. 12 illustrates the hardware structure of a client AV apparatus;
Fig. 13 illustrates the software structure of the client AV apparatus;
Fig. 14 illustrates a content management table;
Fig. 15 illustrates an AV request command in detail;
Fig. 16 illustrates an AV reply command in detail;
Fig. 17 specifically illustrates a record scheduling request command;
Fig. 18 specifically illustrates a record scheduling reply command;
Fig. 19 specifically illustrates a content searching request command;
Fig. 20 specifically illustrates a content searching reply command;
Fig. 21 illustrates a sequence of operation of scheduling recording of content segments;
Fig. 22 illustrates a sequence of operation of recording content segments;
Fig. 23 is a flowchart illustrating operation of the client AV apparatus that schedules recording of the content segments and records the content segments;
Fig. 24 is a flowchart illustrating operation of a home server that schedules recording of the content segments and records the content segments;
Fig. 25 is a flowchart illustrating the operation of the home server that synthesizes the content segments;
Fig. 26 illustrates a synthesis process with overlapping portions contained in the content segments;
Fig. 27 is a flowchart illustrating an operation to decrypt encrypted content segments;
Fig. 28 is a sequence chart illustrating operations of the client AV apparatus and the home server when each client AV apparatus plays back the synthesized content;
Fig. 29 is a flowchart illustrating operation of the client AV apparatus to play back the synthesized content; and
Fig. 30 is a sequence chart illustrating the operation of the home server and the client AV apparatus to disclose the synthesized content.

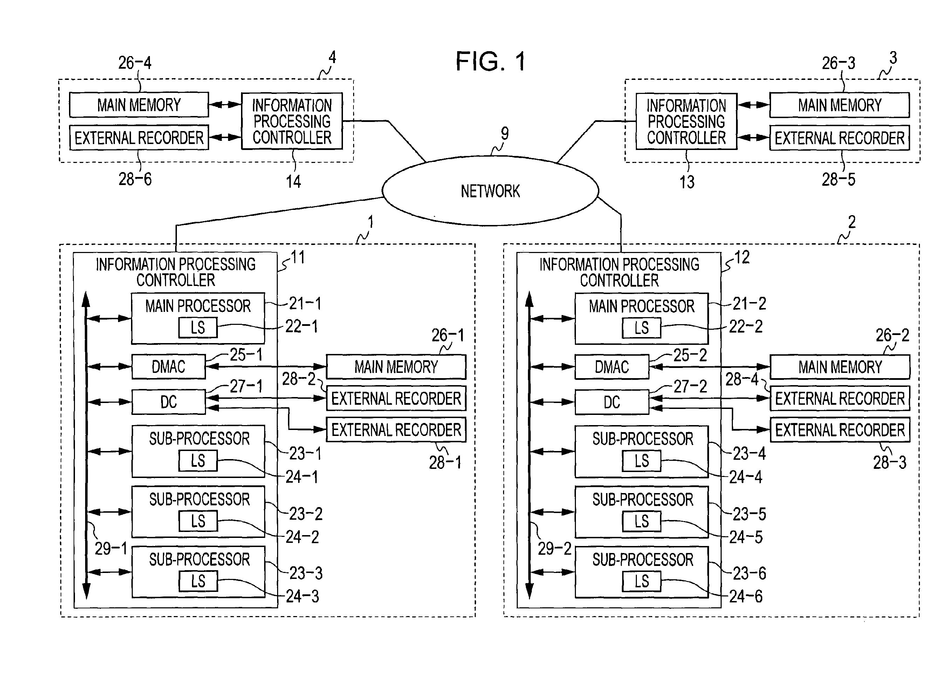

A network system serving as a base of the embodiments of the present invention is discussed first. Fig. 1 illustrates a portion of the network system in which information processing apparatuses 1 through 4 are interconnected via a network 9. The information processing apparatuses 1 through 4 include audio-visual apparatuses, mobile terminals, home servers, etc.

The information processing apparatus 1 includes an information processing controller 11. The information processing controller 11 includes a main processor 21-1, sub-processors 23-1, 23-2, and 23-3, a direct memory access controller (DMAC) 25-1 and a disk controller (DC) 27-1.

The main processor 21-1 manages a schedule of program execution (data processing) of the sub-processors 23-1, 23-2, and 23-3, and generally controls the information processing controller 11 (information processing apparatus 1). Programs other than a management program can be run in the main processor 21-1. When such programs run, the main processor 21-1 also functions as a sub-processor. The main processor 21-1 includes a local storage (LS) 22-1.

A plurality of sub-processors are preferably used, although the use a single sub-processor is also acceptable. The sub-processors 23-1, 23-2, and 23-3 under the control of the main processor 21-1 execute programs in parallel and independently to process data. The program running in the main processor 21-1 may corporate with programs running in the sub-processors 23-1, 23-2, and 23-3. The function program to be discussed later is the one running in the main processor 21-1. The sub-processors 23-1, 23-2, and 23-3 also include local storages (LSs) 24-1, 24-2, and 24-3, respectively.

The DMAC 25-1 accesses the programs and data stored in a main memory 26-1, such as a dynamic random-access memory (DRAM), connected to the information processing controller 11. The DC 27-1 accesses the external recorder 28-1 and 28-2, each connected to the information processing controller 11.

The external recorders 28-1 and 28-2 may be any of a fixed disk (hard disk) and a removable disk. Each of the external recorders 28-1 and 28-2 may be one of a magnetooptic disk (MO), a CD-RW (compact disk rewritable), a CD+RW (compact disk plus rewritable), a DVD-RW (digital versatile disk rewritable), a DVD+RW (digital versatile disk plus rewritable), a memory disk, a SRAM (static random-access memory), and a ROM (read-only memory). The DC 27-1 functions for the external recorders 28-1 and 28-2. As shown in Fig. 1, the information processing controller 11 is designed to connect to a plurality of external recorders 28.

The main processor 21-1, the sub-processors 23-1, 23-2, and 23-3, the DMAC 23-1, and the DC 27-1 are interconnected via a bus 29-1.

The information processing controller 11 is assigned an information processing apparatus ID that uniquely identifies the information processing apparatus 1 including the information processing controller 11 over the network.

The main processor 21-1 and the sub-processors 23-1, 23-2, and 23-3 are assigned a main processor ID and sub-processor IDs that uniquely identify the respective processors.

The information processing controller 11 is preferably constructed of a one-chip integrated circuit (IC). The information processing apparatuses 2, 3, and 4 are similarly constructed. Unless otherwise noted, elements having the same prefix reference numerals have identical functions even if suffix reference numerals hyphen-separated from the prefix reference numerals thereof are different as shown in Fig. 1. The same is true in the following discussion if element names are accompanied by a prefix reference numeral only.

The sub-processors 23 in a single information processing controller 11 execute programs independently to process data. If different sub-processors concurrently performs a read operation or a write operation on the same area in the main memory 26, data can become inconsistent. For this reason, the sub-processor 23 accesses the main memory 26 as described below. ,

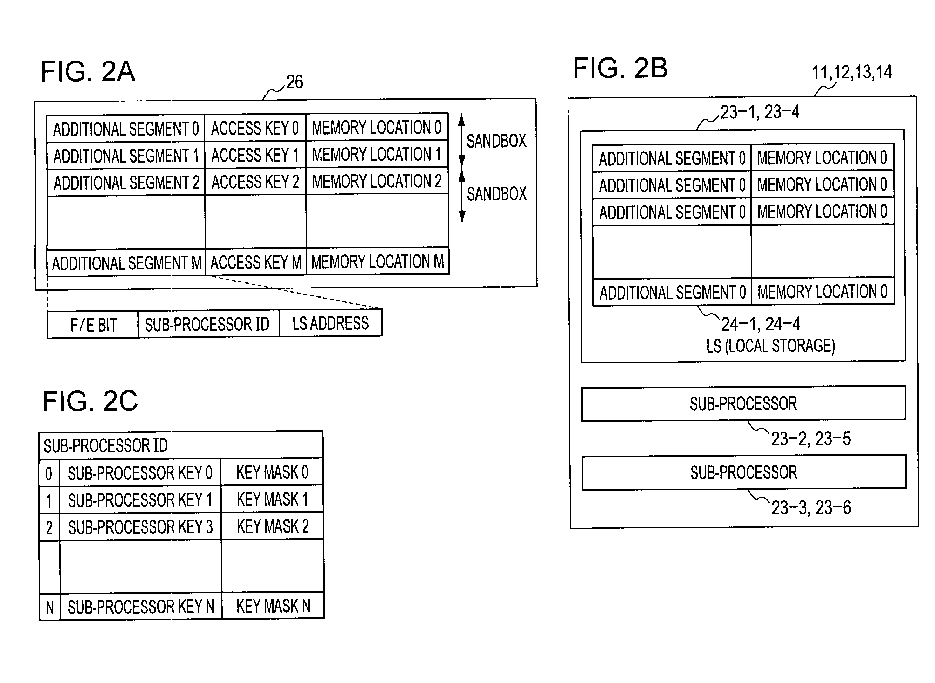

As shown in Fig. 2A, the main memory 26 is constructed of memory locations specifying a plurality of addresses. Each memory location is assigned an additional segment storing information relating to the state of data. The additional segment stores an F/E bit, a sub-processor ID and a local storage (LS) address. Each memory location is assigned an access key to be discussed later. The F/E bit is defined as discussed below.

An F/E bit of "0" indicates that data is currently being processed by the sub-processor 23 or that data is invalid and not updated in its empty state. The F/E bit of "0" thus indicates that the data cannot be read from that memory location. Furthermore, the F/E bit of "0" indicates that data can be written on that memory location. If data is written onto that memory location, the F/E bit is set to "1".

The F/E bit of "1" indicates that the data of that memory location is not yet read by the sub-processor 23 and is unprocessed and updated data. The data of the memory location with the F/E bit of "1" is readable. If the data is read by the sub-processor 23, the F/E bit is set to "0". The F/E bit of "1" indicates that the corresponding memory location receives no data for data writing.

Read reserve can set in the memory location with the F/E bit of "0" (read disabled/write enabled state). To reserve a read operation in the memory location having the F/E bit of "0", the sub-processor 23 writes a sub-processor ID and a LS address of the sub-processor 23 as read reserve information onto the additional segment of the memory location for read reserve.

The sub-processor 23 writes data on the read-reserved memory location having the F/E bit set to "1" (read enabled/write disabled). The data then can be read to the sub-processor ID and the LS address written on the additional segment as the read reserve information.

When a plurality of sub-processors 23 process data at multiple stages, the read and write of the data at each memory location are controlled as described above. The sub-processor 23 performing a back stage process can read front-stage processed data immediately after the sub-processor 23 performing a front stage process writes processed data onto a predetermined address in the main memory 26.

As shown in Fig. 2B, the LS 24 in the sub-processor 23 is composed of memory locations, each specifying a plurality of addresses. Each memory location is assigned an additional segment. The additional segment includes a busy bit.

To read the data stored on the main memory 26 into the memory location of the LS 24 of the sub-processor 23, a corresponding busy bit is set to "1" for reservation. No further data cannot be stored onto the memory location with the busy bit at "1". When the data is read into the memory location of the LS 24, the busy bit is set to "0" to allow a next operation to be performed.

As shown in Fig. 2A, the main memory 26 connected to the information processing controller 11 includes a plurality of sandboxes. The sandbox is used to fix an area in the main memory 22. Each sub-processor 23 is assigned a sandbox. The sub-processor 23 can exclusively use that assigned sandbox. More specifically, the sub-processor 23 can use the assigned sandbox, but cannot access data beyond the area of the assigned sandbox. The main memory 26 includes a plurality of memory locations, and each sandbox is a set of memory locations.

A key management table of Fig. 2C is used to exclusively control the main memory 26. The key management table is stored in a relatively high-speed memory, such as an SRAM in the information processing controller 11, and is associated with the DMAC 25. Each entry in the key management table includes a sub-processor ID, a sub-processor key, and a key mask.

To access the main memory 26, the sub-processor 23 outputs a read command or a write command to the DMAC 25. The command contains a sub-processor ID identifying own sub-processor 23 and an address of the main memory 26 as an access target.

To execute the command from the sub-processor 23, the DMAC 25 checks the sub-processor key of the sub-processor 23 as an access requesting source by referencing the key management table. The DMAC 25 compares the checked sub-processor key of the access requesting source with an access key assigned to the memory location of Fig. 2A of the main memory 26 as the access target. Only if the two keys match, the DMAC 25 executes the command supplied from the sub-processor 23.

When any bit is shifted to "1" in the key mask recorded in the key management table of Fig. 2C, the bit corresponding to the sub-processor key associated with the key mask is set to "0" or "1". For example, the sub-processor key is now "1010". Accessing to only a sandbox having an access key of "1010" is possible with this sub-processor key. If a key mask associated with the sub-processor key is set to "0001", a key mask bit set to "1" is masked from a match determination between the sub-processor key and the access key (no match determination is performed on a key mask bit set to "1"). With the sub-processor key "1010", sandboxes having access keys of "1010" and "1011" are accessible.

The exclusiveness of the sandbox of the main memory 26 is thus assured. If a plurality of sub-processors 23 need to process data at multiple stages, only both the sub-processor 23 performing the front stage process and the sub-processor 23 performing the back stage process can access predetermined addresses of the main memory 26 to protect data.

The key mask value can be modified as discussed below. In the information processing apparatus 1, all key mask values are "0" immediately subsequent to power on. A program loaded to the main processor 21 is now executed in cooperation with a program loaded to the sub-processor 23. Resulting processed data output from the sub-processor 23-1 is stored in the main memory 26. To output the resulting processed data stored in the main memory 26 to the sub-processor 23-2, the area of the main memory 26 storing the resulting processed data output from the sub-processor 23-1 needs to be accessible by each of the sub-processor 23-1 and the sub-processor 23-2. In such a case, the main processor 21 modifies the key mask values to set up an area in the main memory 26 accessible by the plurality of sub-processors 23. The multi-stage process is thus performed by the sub-processors 23.

For example, the sub-processor 23-1 performs a predetermined process on data transmitted from the other processing apparatus, and stores the processed data in a first area in the main memory 22. The sub-processor 23-2 performs a predetermined process on the read data, and stores the processed data onto a second area different from the first area in the main memory 26. With a sub-processor key of the sub-processor 23-1 set to "0100", an access key of the first area of the main memory 26 set to "0100", a sub-processor key of the sub-processor 23-2 set to "0101", and an access key of the second area of the main memory 26 set to "0101", the sub-processor 23-2 is unable to access the first area of the main memory 26. By modifying the key mask to "0001", the sub-processor 23-2 can access the first area of the main memory 26.

In the network system of Fig. 1, the information processing apparatuses 1 through 4 exchange software cells to distribute process among the information processing apparatuses 1 through 4. More specifically, the main processor 21 contained in the information processing controller 11 in one information processing apparatus generates a software cell containing commands, programs, and data, and transmits the software cell to another information processing apparatuses via the network 9.

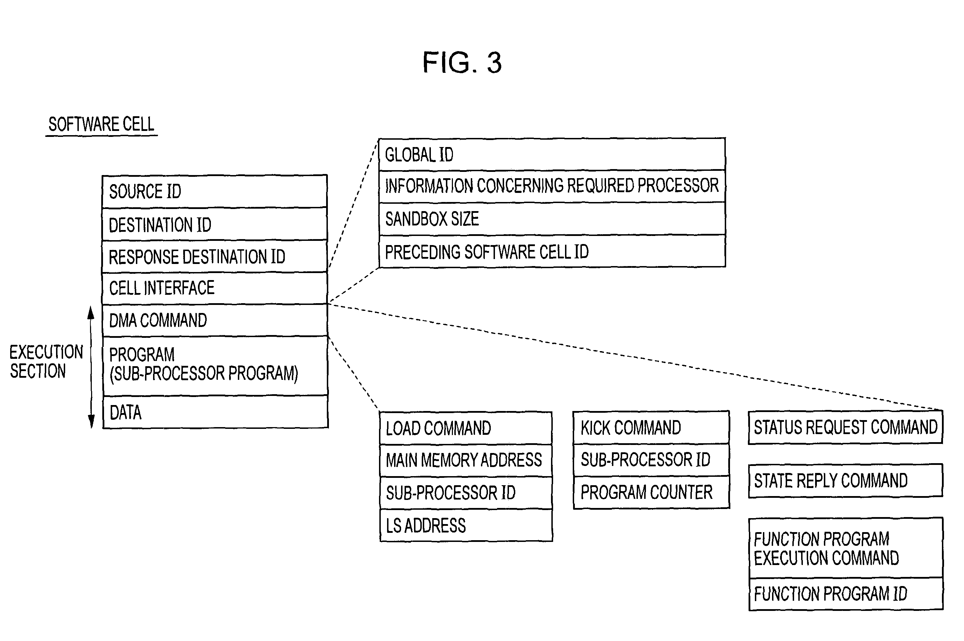

Fig. 3 illustrates the structure of the software cell.

The software cell is composed of a source ID, a destination ID, a response destination ID, a cell interface, a DMA (direct memory access) command, a program, and data.

The source IDs includes a network address of the information processing apparatus 1 as a source of the software cell, an information processing apparatus ID of the information processing controller 11 in the information processing apparatus 1, and identifiers of the main processor 21 and the sub-processor 23 contained in the information processing controller 11 in the information processing apparatus 1 (a main processor ID and a sub-processor ID) .

The destination ID and the response destination ID identify, respectively, the information processing apparatus as the destination of the software cell and the information processing apparatus as a reply destination of the execution results of the software cell.

The cell interface includes information required to use the software cell, and is composed of a global ID, information of a required sub-processor, a sandbox size, and a preceding software cell ID.

The global ID uniquely identifies the software cell over the entire network 9, and is generated based on the source ID, and date and time of generation or transmission of the software cell.

The information of the required sub-processor shows the number of sub-processors required to execute the software cell. The sandbox size shows the memory capacities of the main memory and the LS 24 of each sub-processor 23 required to execute the software cell. The preceding software cell ID is an identifier of a preceding software cell within software cells forming one group requesting a sequential execution of streaming data.

The execution section of the software cell is composed of DMA commands, programs, and data. The DMA commands include a series of commands required to initiate the program. The programs include a sub-processor program to be executed by the sub-processor 23. The data here is to be processed by the programs including the sub-processor program.

The DMA commands include a load command, a kick command, a function program execution command, a status request command, and a status reply command.

The load command is used to load information stored in the main memory 26 to the LS 24 of the sub-processor 23. The load command further includes, in addition to the load command itself, a main memory address, a sub-processor ID and an LS address. The main memory address identifies a predetermined area in the main memory 26 as a load source of the information. The sub-processor ID and the LS address are respectively the identifier of the sub-processor 23 as the load destination of the information and the address of the LS 24 of the sub-processor.

The kick command is used to start the execution of the program. The kick command further includes, in addition to the load command itself, a sub-processor ID and a program counter. The sub-processor ID identifies the sub-processor 23 to be kicked, and the program counter provides an address to a program execution program counter.

The function program execution command is used for a given apparatus to request another apparatus to execute a function program. Upon receiving the function program execution command, an information processing controller of the apparatus identifies, in response to a function program ID, the function program to be initiated.

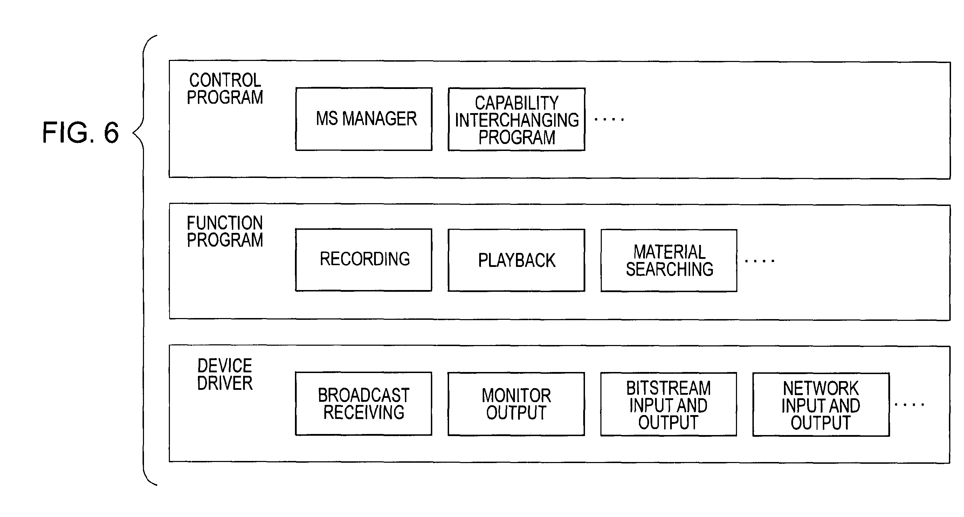

The status request command is used to transmit, to the information processing apparatus identified by the response destination ID, device information relating to current operational status of the information processing apparatus identified by the destination ID. The function program is the one categorized as a function program in the software structure stored in the main memory 26 in the information processing controller 11 of Fig. 6. The function program is loaded to the main memory 26 and executed by the main processor 21.

The status reply command is used for the information processing apparatus having received the status request command to return the device information of own apparatus to the information processing apparatus pointed by the response destination ID contained in the status request command. The status reply command is also used to store the device information onto data area of the execution section.

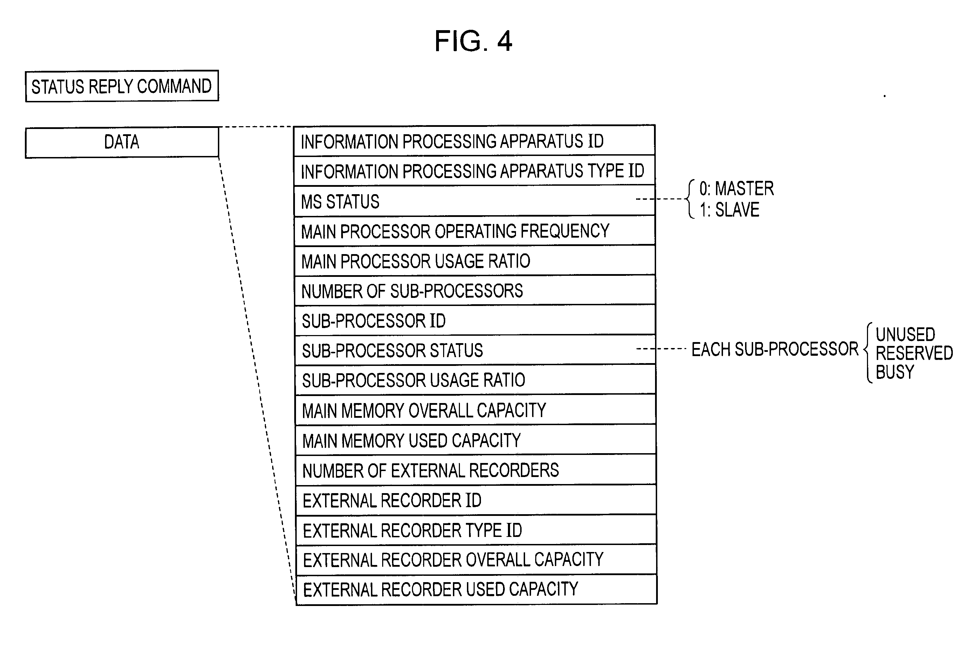

Fig. 4 illustrates the structure of the data area of the software cell with a DMA command being a status reply command.

The information processing apparatus ID is an identifier identifying the information processing apparatus 1 including the information processing controller 11. The information processing apparatus IDs thus identify the information processing apparatuses transmitting the status reply command. The information processing apparatus is now powered on. The main processor 21 contained in the information processing controller 11 of the information processing apparatus generates the information processing apparatus IDs, based on the date and time of power on, the network addresses of the information processing apparatus, and the number of sub-processors 23 contained in the information processing controllers 11 of the information processing apparatus 1.

The information processing apparatus ID contains a value indicative of features of the information processing apparatus. The values indicative of the features of the information processing apparatus are information representing the types of the apparatuses. For example, the information represents that each of the information processing apparatus is one of an audio player and a home server to be discussed later. The information processing apparatus ID can indicate a function, such as audio playback or moving image playback. The values indicative of the features of the information processing apparatus are determined beforehand. The features and the functions of the information processing apparatus is known by reading the information processing apparatus ID.

A master/slave (MS) status indicates which mode each of the information processing apparatus operates at. If the MS status is at "0", the apparatus operates as a master apparatus. If the MS status is at "1", the apparatus operates as a slave apparatus.

A main processor operating frequency is an operating frequency of the main processor 21 in the information processing controller 11. A main processor usage ratio is a usage ratio of the main processor 21 taking into consideration all programs currently running on the main processor 21. More specifically, the main processor usage ratio is a ratio of the overall available performance of the main processor 21 to performance currently in use, and is calculated in million instruction per second (MIPS) or in a processor use time per unit time. The same is true of a subs-processor usage ratio to be discussed later.

The number of sub-processors represents the number of sub-processors 23 contained in the information processing controller 11. The sub-processor ID is an identifier identifying the sub-processor 23 in the information processing controller 11.

The sub-processor status indicates the status of each sub-processor 23, and can be one of "unused", "reserved", and "busy". The status "unused" indicates that the sub-processor 23 is neither currently used nor reserved. The status "reserved" indicates that the sub-processor 23 is not currently used but reserved. The status "busy" indicates that the sub-processor 23 is currently used.

The sub-processor usage ratio indicates the usage ratio of the sub-processor 23 that currently executes the program or that is reserved for the program. If a sub-processor status is "busy", the sub-processor usage ratio indicates a current usage ratio. If the sub-processor status is "reserved", the sub-processor usage ratio indicates an estimated usage ratio at which the sub-processor 23 will run.

The sub-processor ID, the sub-processor status, and the sub-processor usage ratio are set in a combination for each sub-processor 23. The number of combinations corresponds to the number of sub-processors 23 in a single information processing controller 11.

Main memory overall capacity is an overall memory capacity of the main memory 26 in the information processing controller 11, and main memory used capacity is a currently used memory capacity of the main memory 26 in the information processing controller 11.

The number of recorders indicates the number of recorders 28 connected to the information processing controller 11. A recorder ID uniquely identifies each recorder 28 connected to the information processing controller 11. A recorder type ID indicates the type of the recorder 28 (for example, a hard disk, a CD-RW (compact disk rewritable), a CD+RW (compact disk plus rewritable), a DVD-RW (digital versatile disk rewritable), a DVD+RW (digital versatile disk plus rewritable), a memory disk, an SRAM (static random-access memory), or a ROM (read-only memory)).

A recorder overall capacity indicates an overall storage capacity of the recorder 28 identified by the recorder ID, and a recorder used capacity indicates a currently used capacity of the recorder 28.

The recorder ID, the recorder type ID, the recorder overall capacity, and the recorder used capacity are set in a combination for each recorder 28. The number of combinations equals the number of recorders 28 connected to the information processing controller 11. If a plurality of recorders 28 are connected to a single information processing controller 11, the recorders 28 are assigned different recorder IDs. The recorder type IDs, the recorder overall capacities and the recorder used capacities are managed on a per recorder basis.

The main processor 21 contained in the information processing controller 11 in one of the information processing apparatuses generates the software cell having the structure discussed above, and transmits the generated software cell to the information processing controller 11 in own information processing apparatus or another information processing apparatus via the network 9. An information processing apparatus as a source, another information processing apparatus as a destination, a third information processing apparatus as a response destination, and information processing controllers 11 of respective information processing apparatuses are identified by the above-referenced source ID, destination ID, and response destination ID.

The main processor 21 contained in the information processing controller 11 in the information processing apparatus 1 having received the software cell stores the software cell in the main memory 26 thereof. The main processor 21 as the destination reads the software cell and processes DMA commands contained in the software cell. More specifically, the main processor 21 as the destination executes the load command. The main processor 21 loads information from an address in the main memory 26 pointed by the load command onto a predetermined area of the LS 24 of the sub-processor 23 identified by the sub-processor ID and the LS address contained in the load command. The information to be loaded herein includes the sub-processor program contained in the received software cell, data required to execute the program, and other specified data.

The main processor 21 outputs the kick command together with the program counter contained in the kick command to the sub-processor 23 identified by the sub-processor ID contained in the kick command. The specified sub-processor 23 executes the sub-processor program in accordance with the kick command and the program counter. After storing the execution results in the main memory 26, the sub-processor 23 notifies the main processor 21 of the completion of the execution of the program.

A processor that performs the software cell in the information processing controller 11 in the information processing apparatus 1 as the destination is not limited to the sub-processor 23. The main processor 21 can be specified as a processor to perform a main memory program such as the function program contained in the software cell.

In such a case, the information processing apparatus 1 as the source transmits, to the information processing apparatus 1 as the destination, a software cell instead of the sub-processor program. The software cell contains a main memory program and data to be processed by the main memory program and with a DMA command as a load command. The main memory 26 stores the main memory program and the data to be processed by the main memory program. The information processing apparatus 1 as the source transmits, to the information processing apparatus 1 as the destination, identifiers including the main processor ID identifying the main memory program of the information processing controller 11 in the information processing apparatus 1 as the destination, the main memory address, and the function program ID, and the software cell, including the program counter, with the DMA command being the kick command or the function program command. The main processor 21 thus executes the main memory program.

In the network system of the embodiment of the present invention, the information processing apparatus 1 as the source of the software cell transmits, to the information processing apparatus 1 as the destination, the sub-processor program or the main memory program in the software cell. With the sub-processor program loaded onto the sub-processor 23 in the information processing controller 11 in the information processing apparatus 1 as the destination, the information processing apparatus 1 as the destination executes one of the sub-processor program and the main memory program.

If the software cell contains the sub-processor program, the information processing controller 11 in the information processing apparatus 1 as the destination of the software cell loads the sub-processor program onto the specified sub-processor 23. The specified sub-processor 23 thus performs one of the sub-processor program and the main memory program in the software cell. Without a user intervention to operate the information processing apparatus 1 as the destination of the software cell, one of the sub-processor program and the main memory program is reassigned to the information process controller 11 in the information processing apparatus 1 as the destination.

The information processing apparatus 1 can acquire the main memory program, such as one of the sub-processor program and the function program, from another information processing apparatus 1 connected to the network if the information processing controller 11 in own apparatus has no main memory program. Data transfer is performed in a DMA method between the sub-processors 23. Using the above-referenced sandbox, a single information processing controller 11 processes data fast and at a high security level even when the data needs to be processed at multiple stages.

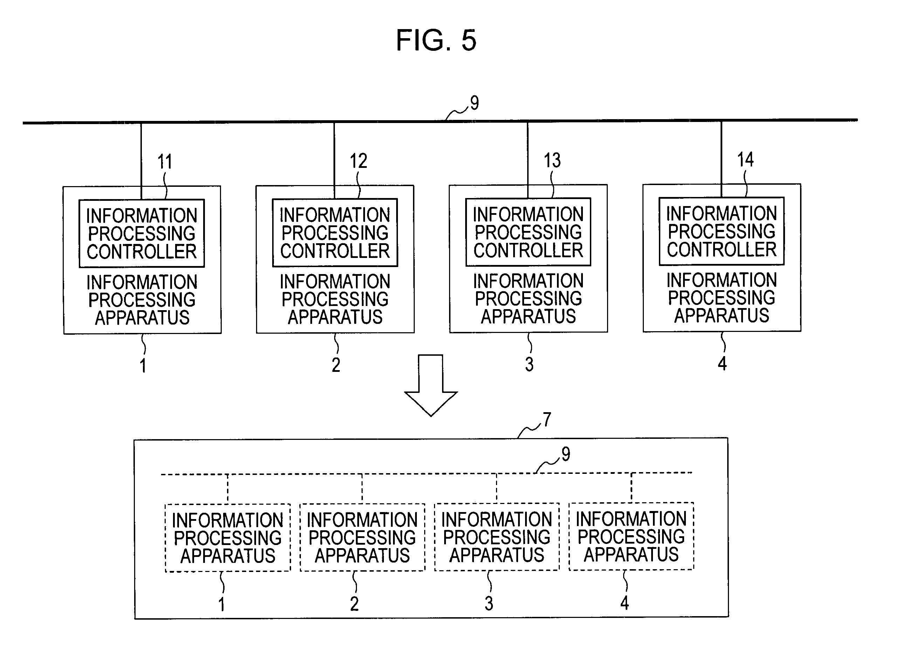

As a result of distributed processing of the software cell, the plurality of information processing apparatuses 1 through 4 interconnected via network 9 as shown in the upper portion of Fig. 5 functions as a single virtual information processing apparatus 7 as shown in the lower portion of Fig. 5. To this end, the following process needs to be performed in the structure to be discussed below.

Fig. 6 illustrates the structure of a software program stored in the main memory 26 in each information processing controller 11. Before power on of the information processing apparatus 1, the software program is pre-stored in the external recorder 28 connected to the information processing controller 11. The programs are categorized into control programs, function programs, and device drivers by function or feature.

The control program is installed on the information processing controllers 11, and is executed by the main processor 21 in the information processing controller 11. The control programs include an MS (master/slave) manger and a capability interchanging program.

The function program, executed by the main processor 21, is the one provided on the information processing controller 11 for recording, playback, or material searching, for example, depending on the function of the information processing apparatus 1.

The device driver is used to perform an input and output function (transmission and reception function) of data to the information processing controller 11 (the information processing apparatus 1). For example, depending on the function of the information processing apparatus 1, the information processing controller 11 is provided with interfaces for broadcast receiving, monitor outputting, bitstream inputting and outputting, and network inputting and outputting.

The information processing apparatus 1 physically connected to the network 9 via an interconnect cable (not shown) is switched on. The information processing apparatus 1 is thus electrically and functionally connected to the network 9. The main processor 21 in the information processing controller 11 of the information processing apparatus 1 loads, to the main memory 26, each program categorized in the control program and each program categorized in the device driver.

In the loading procedure, the main processor 21 reads the program to be loaded from the external recorder 28 by causing the DC 27 to execute a read command. The main processor 21 writes the program onto the main memory 26 by causing the DMAC 25 to execute a write command.

As for the programs categorized in the function program, only required ones can be loaded to the main memory 26 under the control of the main processor 21 when necessary. Alternatively, as the other category programs, the function programs can be loaded to the main memory 26 at the power on.

It is not necessary to store the programs categorized in the function program in the recorders 28 of all information processing apparatuses 1 connected to the network 9. If the external recorder 28 of one of the information processing apparatuses 1 stores the function program, the function program can be exchanged between the information processing apparatuses 1 in the manner discussed above as necessary. A plurality of information processing apparatuses 1 connected to the network 9 can function as the single virtual information processing apparatus 7 to execute the function program as shown in the lower portion of Fig. 5.

The function program executed by the main processor 21 occasionally cooperates with the sub-processor program executed by the sub-processor 23. The main processor 21 reads the function program from the external recorder 28 and writes the read function program onto the main memory 26. If a sub-processor program operating in cooperation with that function program is present, the sub-processor program is also written together with the function program onto the main memory 26. One or a plurality of sub-processor programs can operate in cooperation with the function program. In the case of a plurality of sub-processor programs, all sub-processor programs operating in cooperation with the function program are written onto the main memory 26. The sub-processor program written on the main memory 26 is then written onto the LS 24 in the sub-processor 23, and operates in cooperation with the function program executed by the main processor 21.

The function programs are assigned respective identifiers uniquely identifying themselves as function program IDs as shown in the software cell of Fig. 3. The function program ID is determined at the production phase of the function program based on the date and time of production and the information processing apparatus ID.

The sub-processor program is uniquely identified by a sub-processor program ID assigned thereto. The sub-processor program ID can be an identifier associated with a function program ID cooperating with the sub-processor program, for example, a prefix number as a function program ID followed by a hyphen-separated suffix number. The sub-processor program ID can be an identifier not associated with the function program ID of the cooperating function program. If the function program cooperates with the sub-processor program, the two programs need to store each other's program ID in own program. If the function program operates with a plurality of sub-processor programs, the function program needs to store the sub-processor program IDs of all sub-processor programs.

The main processor 21 reserves an area in the main memory 26 to store device information of own information processing apparatus (relating to operational status), and stores the information as a device information table of own apparatus. The device information includes the information processing apparatus ID and subsequent information listed in the table of Fig. 4.

When an information processing apparatus 1 is switched on in the network system, the main processor 21 in the information processing controller 11 of the information processing apparatus 1 loads the master-slave (MS) manager onto the main memory 26 for execution.

Upon detecting that own information processing apparatus 1 is connected to the network 9, the MS manager checks the presence of another information processing apparatus 1 connected to the network 9. Each of the word "connected" and the word "presence" means that the information processing apparatus 1 is not only physically connected to the network 9 but also electrically and functionally connected to the network 9.

A method of the MS manager to detect the presence of another information processing apparatus connected to the network 9 is described below.

The MS manager generates a software cell with the DMA command being a status request command, both a source ID and a response destination ID pointing to own apparatus and no particular destination ID set, transmits the generated software cell, and sets a timer for network connection verification. Time-out time for the timer is 10 minutes, for example.

If another information processing apparatus 1 is connected to the network 9, the information processing apparatus 1 receives the software cell of the status request command, and transmits, to the information processing apparatus 1 identified by the response destination ID and having issued the state request command, the software cell containing the DMA command being the status reply command and the device information of own apparatus as data. The software cell of the status reply command contains, at least, information identifying own apparatus (information processing apparatus ID, information relating to the main processor, and information relating to the sub-processor), and MS status of own apparatus.

The MS manager of the information processing apparatus having issued the status request command monitors the reception of the software cell of the status reply command from the other information processing apparatus until time is up in the timer. If the status reply command indicating the MS status= 0 (master apparatus) is received, the MS manager sets the MS status in the device information table of own apparatus to "1". In this way, the MS manager recognizes own apparatus as a slave apparatus.

If no status reply command has been received at all until time is up in the network connection verification, or if a status reply command indicating the MS status = 0 (master apparatus) is not received at all until time is up, the MS manager sets the MS status in the device information table of own apparatus to "0". The MS manager recognizes own apparatus as a mater apparatus.

If a new information processing apparatus is connected to the network 9 with no information processing apparatus connected to the network 9 or with no master apparatus present over the network 9, the newly connected information processing apparatus is automatically set as a master apparatus. If a new information processing apparatus is connected to the network 9 with the master apparatus present over the network 9, the newly connected information processing apparatus is automatically set as a slave apparatus.

Regardless of whether own apparatus is a mater or a slave apparatus, the MS manager references status information and monitors the states of the other apparatuses by regularly transmitting the status request command to the network 9. No status reply command may be received from another particular information processing apparatus within a predetermined period of time when the main power of the information processing apparatus 1 connected to the network 9 is cut off or when the information processing apparatus is disconnected from the network 9. A newly information processing apparatus may be connected to the network 9. If such a change takes place in the connection state of the network 9, the MS manager notifies a capability interchanging program, to be discussed later, of the change.

The main processor 21 executes the capability interchanging program when the reference of another apparatus on the network 9 and the notice of the ending of the setting of the MS status concerning own apparatus are received from the MS manager.

If own apparatus is a master apparatus, the capability interchanging program acquires the device information of all other information processing apparatuses, namely, the slave apparatuses, connected to the network 9. The apparatus generates the software cell with the DMA command being the status request command and transmits the software cell to the network 9 to acquire the device information of the slave apparatuses. To acquire the device information, own apparatus generates a software cell with the DMA command being a status request command, and transmits the software cell to the other information processing apparatuses. Own apparatus then receives, from the other information processing apparatuses, a software cell containing the status reply command as the DMA command and the device information, as data, concerning the other information processing apparatuses.

As the device information table of own apparatus as master apparatus, the capability interchanging program reserves an area in the main memory 26 of own apparatus to store the device information of all slave apparatuses connected to the network 9, and then records the device information as the device information table of the slave apparatuses. More specifically, the device information of all information processing apparatuses 1 connected to the network 9, including own apparatus, is stored in the main memory 26 of the master apparatus as the device information table.

If own apparatus is a slave apparatus, the capability interchanging program acquires the device information of all other information processing apparatuses connected to the network 9, except the master apparatus and own apparatus, and stores the information processing apparatus ID and the MS status contained in the device information onto the main memory 26 of own apparatus. The device information of own apparatus is recorded onto the main memory 26 of own apparatus as the device information table while the information processing apparatus IDs and the MS statuses of the other information processing apparatuses 1 (master and slave apparatuses), other than own apparatus, connected to the network 9 are also recorded as another device information table.

Regardless of whether own apparatus is a mater apparatus or a slave apparatus, the capability interchanging program acquires, from the MS manager, information relating to a change in the connection status of the network 9, for example, when a new information processing apparatus 1 is connected to the network 9. The capability interchanging program then records the information on the main memory 26.

The MS manager and the capability interchanging program can be executed by not only the main processor 21 but also any of the sub-processors 23. The MS manager and the capability interchanging program are preferably resident programs that are continuously operative while the main power of the information processing apparatus 1 remains turned on.

When the MS manager notifies the capability interchanging program that the main power of the information processing apparatus 1 is cut off or that the information processing apparatus 1 is disconnected from the network 9, the capability interchanging program deletes the device information table of the information processing apparatus from the main memory 26 of own apparatus regardless of whether own apparatus is a mater apparatus or a slave apparatus.

If the information processing apparatus disconnected from the network 9 is the master apparatus, a new master apparatus is determined in the method as discussed below.

The information processing apparatuses not disconnected to the network 9 converts the information processing apparatus IDs of own apparatus and the other apparatuses into numerical values to compare the information processing apparatus ID of own apparatus with the information processing apparatuses IDs of the other information processing apparatuses. If the information processing apparatus ID of own apparatus is the lowest among the information processing apparatus IDs of the apparatuses still connected to the network 9, the slave apparatus becomes a master apparatus with the MS status set to "0". As previously discussed, the master apparatus acquires the device information of all other apparatuses (slave apparatuses) and store the device information onto the main memory 26.

The master apparatus needs to learn the user operation and the operational statuses of the slave apparatuses in order to cause the plurality of apparatuses 1 through 4 connected to the network 9 to function as the single virtual information processing apparatus 7 as shown in the lower portion of Fig. 5.

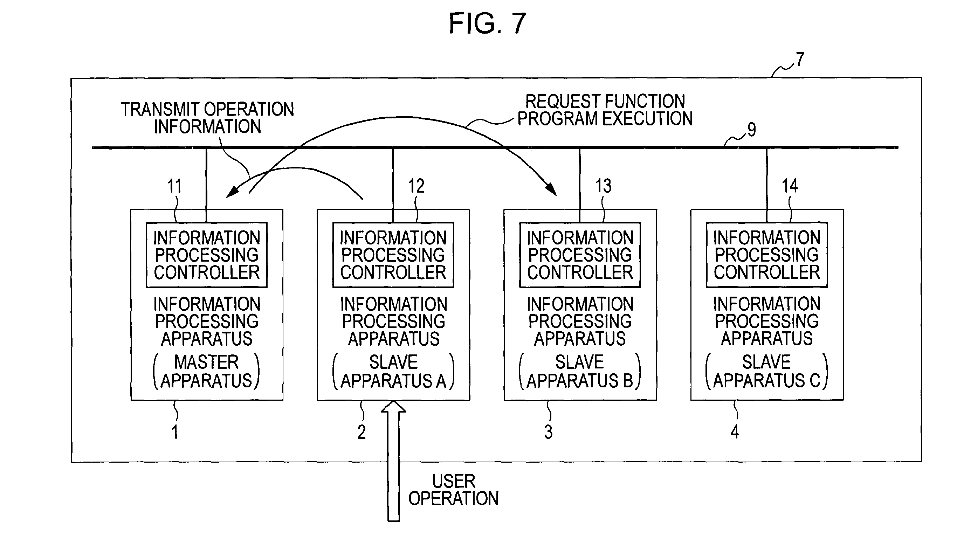

Fig. 7 illustrates the four information processing apparatuses 1 through 4 that function as the single virtual information processing apparatus 7. The information processing apparatus 1 functions as a master apparatus while the information processing apparatuses 2-4 function as slave apparatuses A, B, and C.

If an information processing apparatus connected to the network 9 and operated by the user is the information processing apparatus 1, the information processing apparatus 1 directly learns the operation information. If an information processing apparatus operated by the user is a slave apparatus, the operation information is transmitted from the slave apparatus to the master apparatus 1. Regardless of whether an information processing apparatus operated by the user is the master apparatus 1 or the slave apparatus, the information processing apparatus 1 always learns the operation information. The operation information is transmitted in the software cell with the DMA command being an operation information transmission command.

The main processor 21-1 in the information processing controller 11 in the information processing apparatus 1 selects a function program in response to the operation information. If necessary, the main processor 21-1 in the information processing controller 11 in the information processing apparatus 1 loads the function program from the external recorders 28-1 and 28-2 on own apparatus to the main memory 26-1 in accordance with the previously discussed method. Alternatively, another information processing apparatus (slave apparatus) may transmit the function program to the master apparatus 1.

The function program defines specifications relating to the apparatus, required on a per execution unit basis, including information as listed in Fig. 4, such as the information processing apparatus ID, the throughput of the main processor or the sub-processor, the main memory used capacity, conditions relating to the external recorder, etc.

The main processor 21-1 in the information processing controller 11 in the information processing apparatus 1 reads the required specifications needed to execute each function program. The main processor 21-1 references beforehand the device information table of each information processing apparatus stored in the main memory 26-1 using the capability interchanging program. The device information contains information listed in Fig. 4, including the information processing apparatus ID and information relating to the main processor, the sub-processor, the main memory, and the external recorders.

The main processor 21-1 in the information processing controller 11 in the information processing apparatus 1 successively compares the device information of each information processing apparatus connected to the network 9 with the required specifications needed to execute each function program.

For example, when the function program needs a video recording function, only an information processing apparatus having the video recording capability is identified and selected based on the information processing apparatus type ID. A slave apparatus satisfying the throughput of the main processor or the sub-processor, the main memory used capacity, and the conditions of the external recorder required to execute the function program is selected as an execution request candidate. If a plurality of execution request candidates are identified, one is selected from the candidates.

If the slave apparatus to request is selected, the main processor 21-1 in the information processing controller 11 in the information processing apparatus 1 updates the device information table of that slave apparatus stored in the main memory 26-1 in the information processing controller 11 of own apparatus.

The main processor 21-1 in the information processing controller 11 in the information processing apparatus 1 generates a software cell with the DMA command being the function program execution command, sets, in the cell interface of the software cell, the information of the sub-processor relating to the function program and the sandbox size (see Fig. 3) required for the function program, and transmits the software cell to the slave apparatus to request.

The slave apparatus that is requested to execute the function program executes the function program while updating the device information table on own apparatus. If necessary, the main processor 21 in the information processing controller 11 in the slave information processing apparatus loads, from the external recorder 28 in own apparatus to the main memory 26, the function program and the sub-processor program cooperating with the function program in the previously discussed manner.

If one of the required function program and the sub-processor program cooperating with the function program is not recorded in the external recorder 28 of the slave apparatus that has been requested to execute the function program, another information processing apparatus can transmit the one of the function program and the sub-processor program to the function program execution requested slave apparatus.

Another information processing apparatus can execute the sub-processor program by means of the previously discussed load command or the kick command.

Subsequent to the execution of the function program, the main processor 21 in the information processing controller 11 in the slave information processing apparatus transmits an end notice to the main processor 21-1 in the information processing controller 11 in the master information processing apparatus 1 while updating the device information table on own apparatus at the same time. Upon receiving the end notice, the main processor 21-1 in the information processing controller 11 in the master information processing apparatus 1 updates the device information table of the slave apparatus that has executed the function program.

Based on the reference results of the device information table of own apparatus and the other apparatuses, the main processor 21-1 in the information processing controller 11 in the information processing apparatus 1 can select own apparatus as an information processing apparatus that is to execute the function program. In such a case, the master apparatus 1 executes the function program.

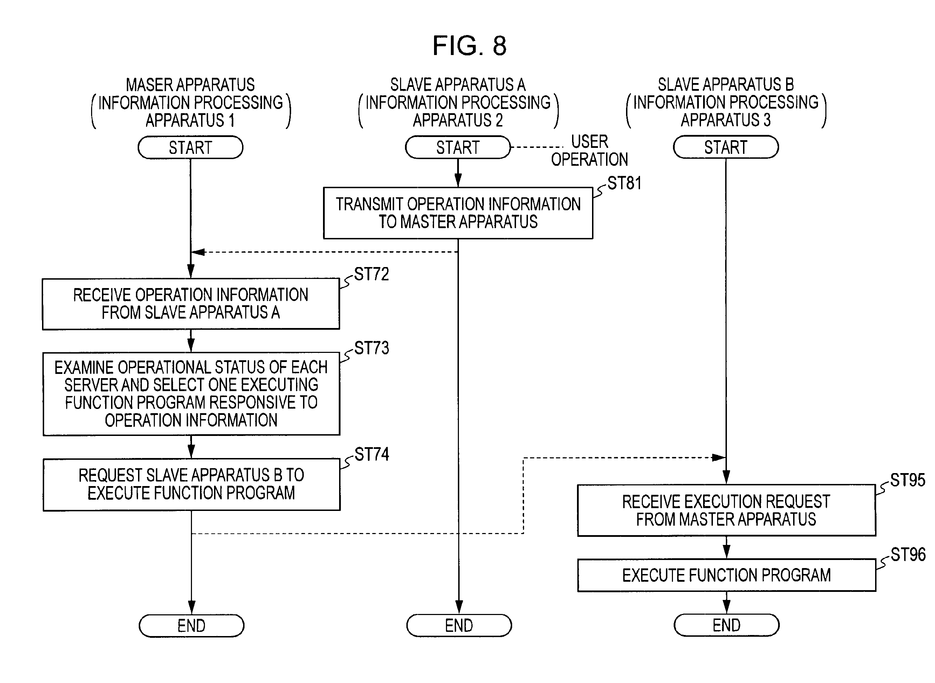

As shown in Fig. 7, the user operates the slave apparatus A (information processing apparatus 2), and the slave apparatus B (information processing apparatus 3) executes in response to the user operation. The distributed process thus performed is described with reference to Fig. 8.

In the distributed process of Fig. 8, the user operates the slave apparatus a, thereby initiating the distributed process in the entire network system including the slave apparatus A. In step S81, the slave apparatus A transmits the operation information to the master apparatus 1.

The master apparatus 1 receives the operation information in step S72. In step S73, the master apparatus 1 examines the operational status of each information processing apparatus from the device information table of own apparatus and the other apparatuses stored in the main memory 26-1 of own apparatus. The master apparatus 1 thus selects an information processing apparatus that is able to execute the function program responsive to the received operation information. In this case, the slave apparatus B is selected.

The master apparatus 1 requests the selected slave apparatus B to execute the function program in step S74.

The slave apparatus B receives the execution request in step S95, and executes the requested function program in step S96.

By operating a single information processing apparatus, the user can cause the plurality of information processing apparatuses 1 through 4 to function as the single virtual information processing apparatus 7 without operating the other apparatuses in this way.

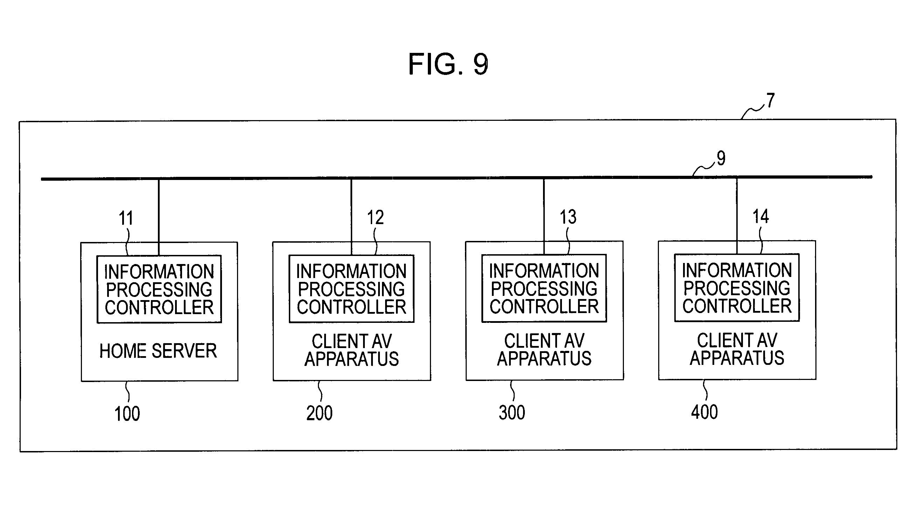

The AV network system of one embodiment of the present invention is described below with reference to Fig. 9. As shown, the information processing apparatus 1 of Fig. 2 is a home server 100, and the information processing apparatuses 2-4 are client AV apparatuses 200 through 400, respectively. The client AV apparatus can be a television receiver, and the number of client AV apparatuses is not limited to three.

In this AV system, each client AV apparatus stream receives television broadcast programs or music, while the home server 100 records and manages the received contents. When each client AV apparatus receives a content segment as a portion of a single content, the home server 100 receives and records the content segment from the client AV apparatus. The home server 100 further synthesizes the content segments into a single content and then transmits the single content back to each client AV apparatus 200 for playback. This operation will be discussed later.

Each of the home server 100, and the client AV apparatuses 200 through 400 includes the information processing controller including the main processor, and the sub-processor. The home server 100, and the client AV apparatuses 200 through 400 execute the software cell using the DMA command, and exchange a variety of data with each other. Each apparatus is identified by the unique information processing apparatus ID thereof.

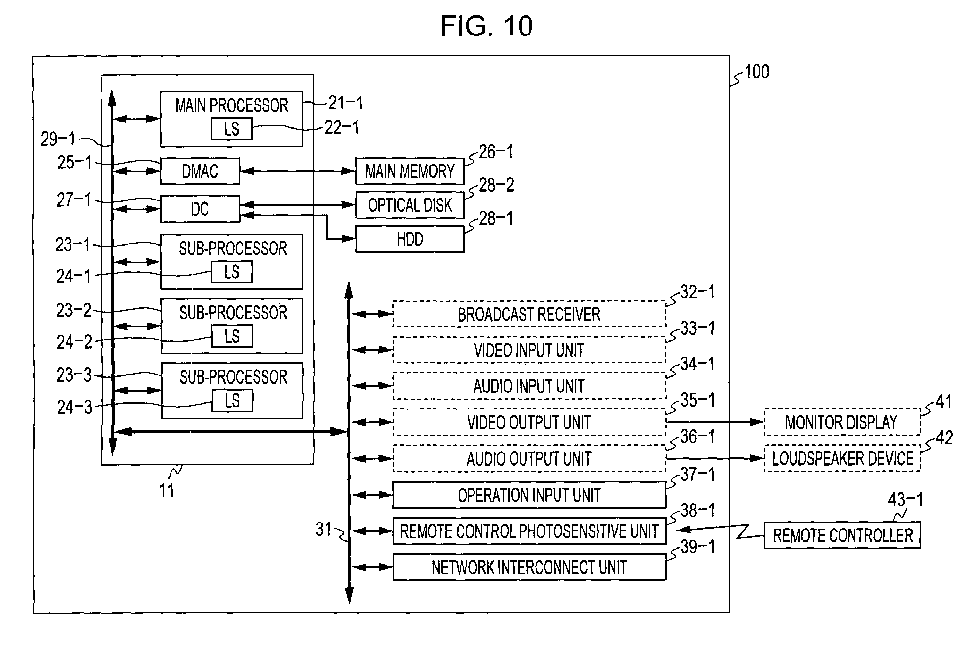

Fig. 10 illustrates the hardware structure of the home server 100. As shown, the home server 100 includes, as the external recorder 28-1 of Fig. 1, a hard disk drive (HDD) and, as the external recorder 28-1 of Fig. 1, one of optical disks such as a CD-RW (compact disk rewritable), a CD+RW (compact disk plus rewritable), a DVD-RW (digital versatile disk rewritable), a DVD+RW (digital versatile disk plus rewritable), and Bluray-Disc®. The external recorder 28-1 stores a variety of application programs for recording and managing contents, programs, and data such as a content management table for managing contents.

A bus 29-1 of the information processing controller 11 is connected to a bus 31. Connected to the bus 31 are a broadcast receiver 32-1, a video input unit 33-1, an audio input unit 34-1, a video output unit 35-1, an audio output unit 36-1, an operation input unit 37-1, a remote control photosensitive unit 38-1, and a network interconnect unit 39-1. A monitor display 41 and a loudspeaker device 42 can be connected to the video output unit 35-1 and the audio output unit 36-1, respectively. The broadcast receiver 32-1, the video input unit 33-1, the audio input unit 34-1, the video output unit 35-1 and the audio output unit 36-1 are not necessarily connected as long as the home server 100 is used for server applications only.

The operation input unit 37-1 includes a keyboard, a mouse, a touchpad, a pushbutton, a jog dial, etc, and receives an operation input from the user of the home server 100. The remote control photosensitive unit 38-1 receives a remote control infrared signal from a remote controller 43-1. The network interconnect unit 39-1 is an interface for exchanging a variety of commands and data with the client AV apparatus via the network 9.

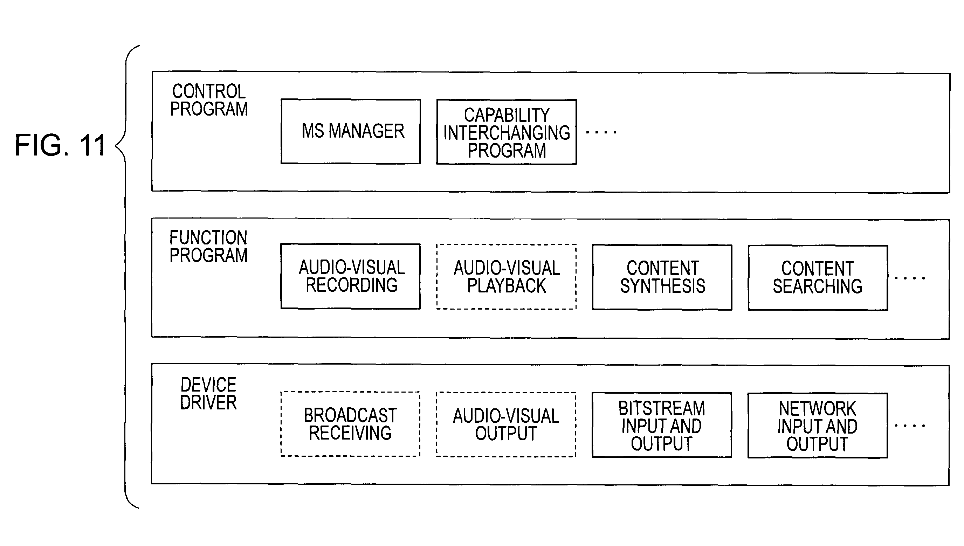

Fig. 11 illustrates the software structure of the home server 100. As shown, the home server 100 includes a control program, a function program, and a device driver.

The control programs include the previously discussed MS manager and the capability interchanging program. The function programs are used to perform the function the home server 100 provides to the user. The function programs include a program for recording, onto one of the HDD 28-1 and the external recorder 28-2, a stream of contents including moving images or music received from each client AV apparatus via the network 9 and for managing the recorded contents, a program for synthesizing the content segments into a single content, and a program for searching the streams of contents recorded on one of the HDD 28-1 and the external recorder 28-2 in response to a request from the client AV apparatus, and for transmitting the requested content to the client AV apparatus via the network 9. The device driver controls broadcast receiving, audio-visual output, bit stream inputting and outputting, and network inputting and outputting. As long as the home server 100 is used for server applications only, the device driver for broadcast reception and audio-visual outputting is not required.

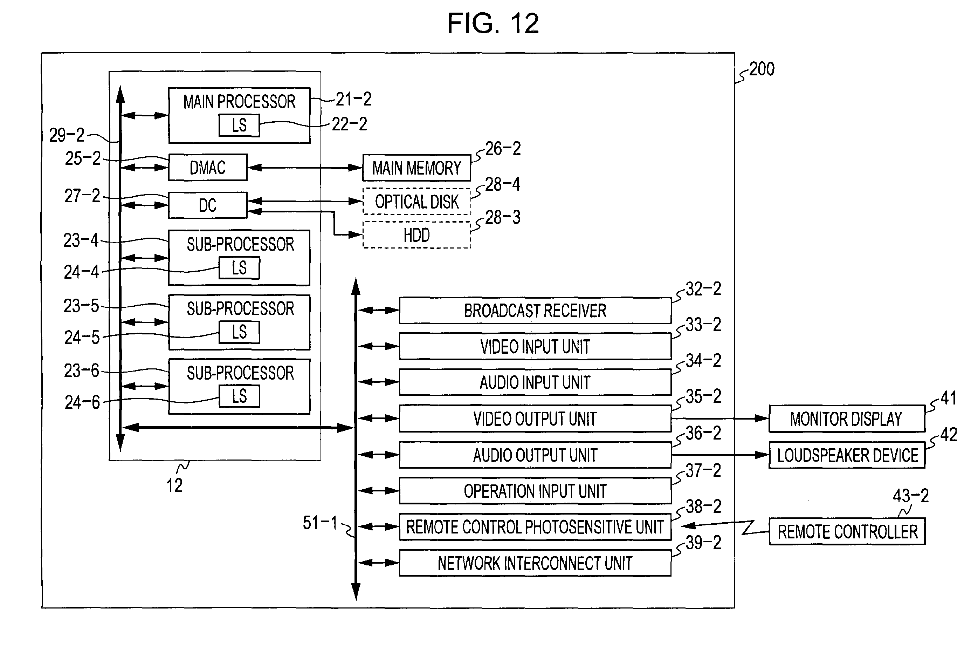

Fig. 12 illustrates the hardware structure of the client AV apparatus 200. As shown, an HDD is connectable as the external recorder 28-3 of Fig. 1 and an optical disk drive is connectable as the external recorder 28-4 of Fig. 1. In this client AV apparatus 200, the external recorders 28-3 and 28-4 are not required elements.

A bus 29-2 in an information processing controller 12 is connected to a bus 51-1. Connected to the bus 51-1 are a broadcast receiver 32-2, a video input unit 33-2, an audio input unit 34-2, a video output unit 35-2, an audio output unit 36-2, an operation input unit 37-2, a remote control photosensitive unit 38-2, and a network interconnect unit 39-2.

The broadcast receiver 32-2 receive a broadcast signal. The video input unit 33-2, and the audio input unit 34-2 receive a video signal, and an audio signal from outside the client AV apparatus 200. These units convert the respective input signals into digital data in predetermined formats, and output the digital data to the information processing controller 12 via the bus 51-1 for processing. The video output unit 35-2 and the audio output unit 36-2 process video data and audio data output from the information processing controller 12 to the bus 51-1, and output the video data and the audio data, respectively, in digital form or analog form to outside of the client AV apparatus 200. A monitor display 41 is connected to the video output unit 35-2 and a loudspeaker device 42 is connected to the audio output unit 36-1. The operation input unit 37-2 receives, from the user using the client AV apparatus 200, a record scheduling request, a record request, and a record playback request of content segments to be discussed later.

The client AV apparatus 300 and the client AV apparatus 400 have the same hardware structure.

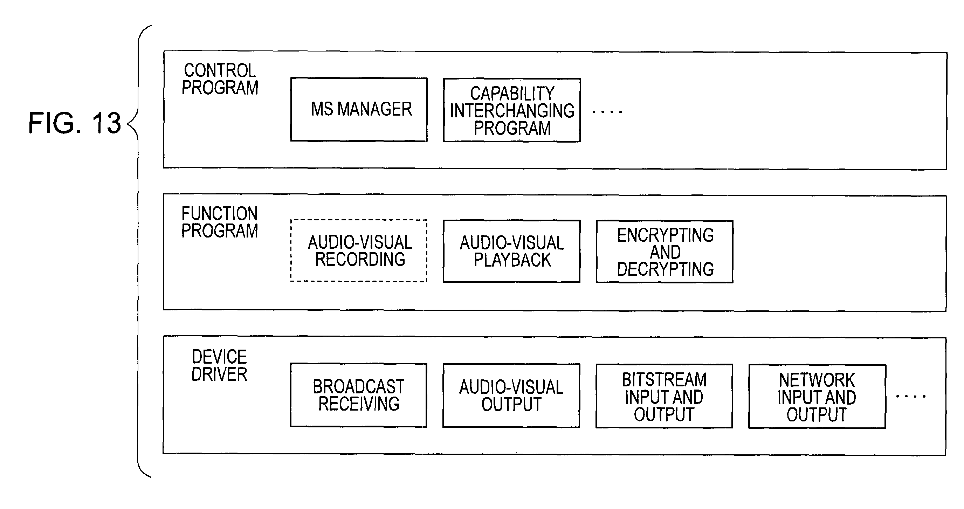

Fig. 13 illustrates the software structure of the client AV apparatus 200. As shown, the client AV apparatus 200 includes a control program, a function program, and a device program. The control programs contain the MA manager and the capability interchanging program. The function programs allow the client AV apparatus to provide the user with functions, and include, for example, a program for encrypting, on a real-time basis, a content stream input from one of the broadcast receiver 32-2, the video input unit 33-2, and the audio input unit 34-2, and a program for decrypting and then playing back, on a real-time basis, an encrypted content stream received from the network. It is optional to include, in the function programs, a program for recording a content stream on the external recorders 28-3 and 28-4. The device driver controls broadcast receiving, monitor outputting, bitstream outputting and inputting, and network inputting and outputting.

The client AV apparatus 300 and the client AV apparatus 400 have the same software structure.

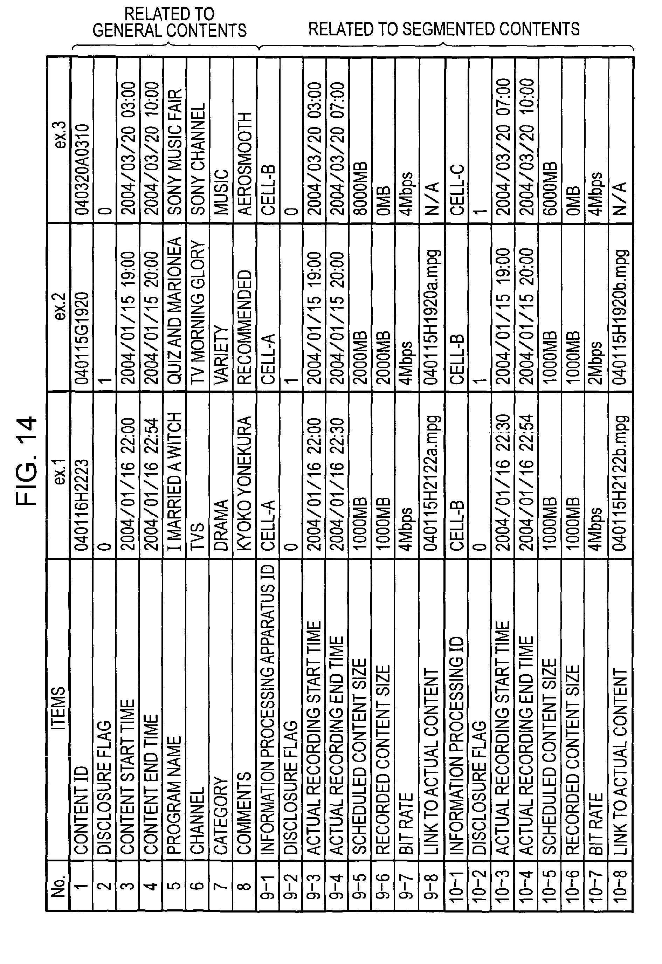

The home server 100 records and manages a content received from each client AV apparatus using a content management table. The content management table is described below with reference to Fig. 14. In this embodiment, the content is a television program. Fig. 14 illustrates three content examples (ex. 1 through ex. 3). Each content includes two content segments.

As shown in Fig. 14, the content management table is composed of two major items, namely, items relating to the entire content, and items relating to the content segments. The entire content refers to a single television program, while the content segments are those received by the client AV apparatuses 200, 300, and 400, respectively, and refer to a video of a time slot of the single television program.

The items relating to the entire content includes a content ID, a disclosure flag, a content start time, a content end time, a program name, a channel, a category, and a comment.

The content ID uniquely identifies the content, namely, the program recorded on the home server 100. The home server 100 attaches the content ID to each program by referencing program data, channel data, program broadcast start time, and program broadcast end time, received together with program record scheduling from each client AV apparatus. This operation will be described in detail later.

The disclosure flag indicates whether each content is disclosed. If the flag is "0", the content is not disclosed, and if the flag is "1", the content is disclosed. The client AV apparatus encrypts the received content segment using the encryption and decryption programs, and transmits the encrypted content segment to the home server 100. The non-disclosed state of the content refers to the state in which a content segment is decrypted by a client AV apparatus, and can be neither referenced nor played back by the other client AV apparatuses and the home server 100 other than the client AV apparatus that has encrypted the content. The disclosed state of the content refers to the state in which each content is decrypted and referenced and played back by any client AV apparatus.

Upon receiving a content segment, each client AV apparatus encrypts the received content segment and transmits the encrypted content segment to the home server 100 (in the non-disclosed state), and the client AV apparatus decrypts the encrypted content segment in response to a decryption request of the home server 100, and returns the decrypted content segment (in the disclosed state). As listed in the table of Fig. 14, ex. 1 (content ID=040116H2223) and ex. 3 (content ID=040115G1920) are in a non-disclosed state, and ex. 2 (content ID=040320A0210) is in a disclosed state.

The content start time and the content end time represent year, month, day, and time at the start and the end of a single content (program). More specifically, the content of ex. 1 lasts from 22:00, January 16, 2004 to 22:54, January 16, 2004. The time information is produced from data that has been transmitted together with a record scheduling request from each client AV apparatus.

The program name represents a title of the program as a content. The channel represents a broadcasting station that broadcasts the content. The category represents the category of the content, such as drama, variety, music, news, sport, etc. The comments provide program information such as the content of the program, performers of the program, and recommendability rating of the program.

The program name, the channel, the category, and the comments are produced based on the electronic program guide (EPG) each client AV apparatus has acquired from data broadcasting and the Internet. These pieces of information serve as metadata. The home server 100 searches the metadata for a program in response to a request from the client AV apparatus, and causes the client AV apparatus to display a list of programs based on the metadata.

The items relating to the content segments includes the information processing apparatus ID, the disclosure flag, the actual recording start time, the actual recording end time, the scheduled content size, the bit rate, and the link to the contents.

The information processing apparatus ID is assigned to each apparatus in the AV network system of the present embodiment, and is thus used to identify each client AV apparatus as a source of each content segment. In the present embodiment, the information processing apparatus IDs of the client AV apparatuses 200, 300, and 400 are CELL-A, CELL-B, and CELL-C, respectively.

The disclosure flag indicates whether each content is disclosed or non-disclosed. If any one of the content segments is non-disclosed, the entire content becomes non-disclosed with the flag set to "0".

The actual recording start time and the actual recording end time are year, month, day, and time at the start and end of each content segment in the home server 100. The time information is produced based on data that is transmitted together with a record scheduling request from each client AV apparatus to the home server 100. When record schedule time has come, the home server 100 starts recording the content in response to a record start request from each client AV apparatus, and the actual recording start time and the actual recording end time are replaced with start time data and end time data contained in the record start request.

The actual recording start time and the actual recording end time can be different from content segment to content segment even in the same program (the same content ID). As shown in the content segment ex. 1, the content identified by the content ID=040116H2223 is broadcast from 22:00 to 22:54, January 16, 2004. The client AV apparatus 200 (ID=CELL-A) receives a stream of the content from 22:00 to 22:30, and the client AV apparatus 200 (ID=CELL-B) receives a stream of the content from 22:30 to 22:54. The home server 100 synthesizes the content segments with the actual recording start time shifted or segmented, and a plurality of client AV apparatuses can relay record a single program.

The scheduled content size represents a storage capacity on one of the HDD 28-1 and the optical disk reserved for a content segment when the home server 100 receives a record scheduling request of the content segment from each client AV apparatus. The recorded content size represents the size of the actually recorded content segment. As listed in the table of Fig. 14, when the record start time has not yet come, the recorded content size is zero as shown in CELL-C in ex. 3.

The bit rate is a transmission bit rate at which each content segment is transmitted from each client AV apparatus to the home server 100. The data of the bit rate is also transmitted when the record scheduling request is issued from each client AV apparatus to the home server 100. The bit rate is different depending on the performance of each client AV apparatus and the bit rate of the stream transmitted from the broadcasting station. Each client AV apparatus may have a function of converting the bit rate of the received content segment.

The link to the actual content indicates a location of an actual content segment stored in one of the HDD 28-1 and the optical disk 28-2.

The information of each content segment is uniquely identified by the content ID using the content management table. The program is thus segmented and recorded, and then later synthesized while keeping the consistency of the program even if the content segments are different in the record time and end time, content, and the receiving client AV apparatuses.

Since the home server 100 assigns the content ID on a per program basis rather than on a per client AV apparatus basis, no adjustment is required of the content IDs among the client AV apparatuses.

The software cell exchanged among each client AV apparatus and the home server 100 in the AV network system of the present embodiment is described below.

In the present system, the home server 100 and each client AV apparatus generate the software cell in accordance with the previously discussed master/slave determination procedure, and sets the MS status by transmitting and receiving the status request command and the status reply command. The home server 100 is typically set as a master apparatus (MS status being 0) and each client AV apparatus is typically set as a slave apparatus (MS status being 1).

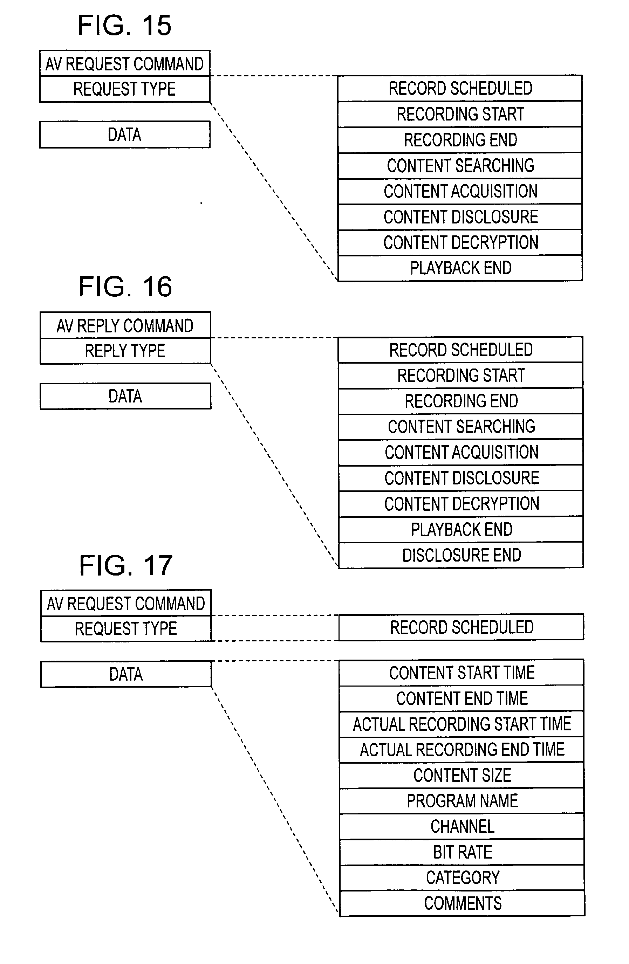

An AV request command and an AV reply command are exchanged, as DMA commands, between the home server 100 and each client AV apparatus in addition to the previously discussed load command, kick command, status request command, and status reply command. Fig. 15 illustrates the AV request command in detail. Fig. 16 illustrates the AV reply command in detail.

As shown in Fig. 15, the AV request commands include request types, such as record scheduling, record start, record end, content searching, content acquisition, content disclosure, content decryption, and content playback. The content decryption request command is transmitted from the home server 100 to each client AV apparatus. The other commands are transmitted from each client AV apparatus to the home server 100.

As shown in Fig. 16, the AV reply commands include reply types, such as record scheduling, record start, record end, content searching, content acquisition, content disclosure, content decryption, playback end, and disclosure end. The reply type commands respectively correspond to the request type commands of Fig. 15. The content decryption reply command, from among the commands, is transmitted from each client AV apparatus to the home server 100 in response to the content decryption request command. The other reply commands are transmitted from the home server 100 to each client AV apparatus.

The format of the software cell for the record scheduling request/reply and the content searching request/reply, from among the AV request commands and the Av reply commands, is specifically described below.

Fig. 17 specifically illustrates the record scheduling request command. To request the home server 100 to schedule recording of the software cell received by own apparatus as shown, each client AV apparatus transmits, to the home server 100, the record scheduling request command together with the data of the content start time, the content end time, the actual recording start time, the actual recording end time, the program name, the channel, the bit rate, the category, and the comments. Each client AV apparatus extracts each of these data via the Internet or from the EPG data acquired via data broadcasting.

When the record scheduling command is transmitted in the software cell, the source ID and the response destination ID are the information processing apparatus ID of each client AV apparatus and the destination ID is the information processing apparatus ID of the home server 100. If the client AV apparatus has previously transmitted the record request command in the software cell, the ID of the software cell is transmitted as a preceding software cell ID in the cell interface.

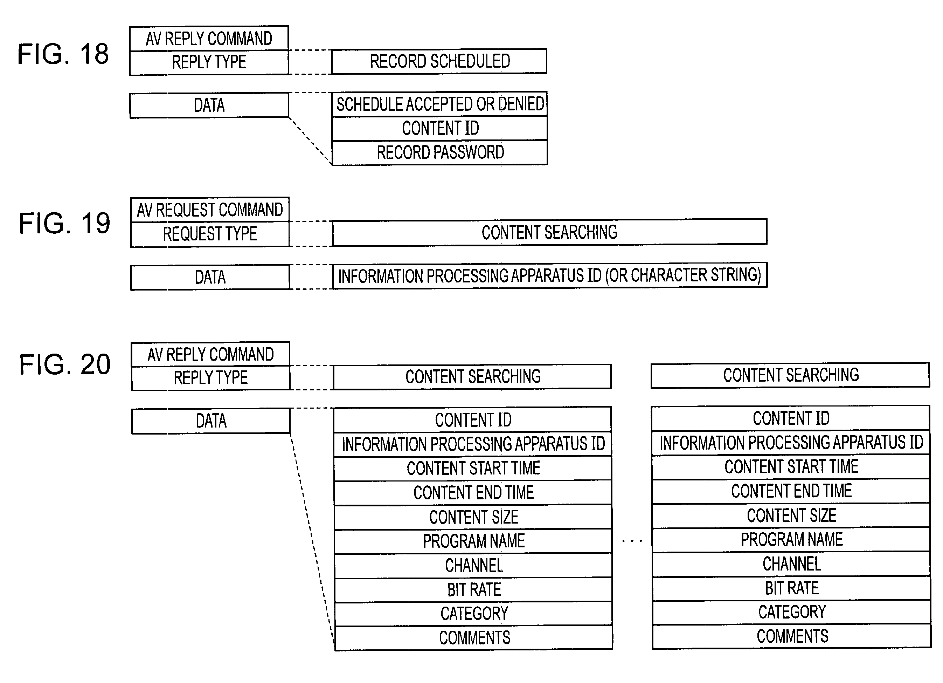

Fig. 18 specifically illustrates the record scheduling reply command. Upon receiving the record request command from the client AV apparatus, the home server 100 determines whether record scheduling is acceptable. If it is determined that the record scheduling is acceptable, the home server 100 transmits data, containing the content ID of the content scheduled to be recorded, and a record password, as a record scheduling replay command to the client AV apparatus that has transmitted the record scheduling request command.

Whether the record scheduling is acceptable or not is determined based on the available capacity on the HDD 28-1 and the optical disk 28-2. The home server 100 references the actual recording start time, the actual recording end time, and the bit rate contained in the record scheduling request command. If the home server 100 determines that the available storage capacity is not sufficient to store the content segment, a notice that the record scheduling is denied is transmitted. If a sufficient storage capacity is available, the home server 100 transmits a notice that the record scheduling is acceptable.

The content ID is uniquely assigned to the content pointed by the data contained in the record scheduling request command, such as the content start time, the content end time, the program name, and the channel. When each client AV apparatus requests the home server 100 to actually record the content at the actual recording time, the record password is used to authenticate that the apparatus is the one that has received the record scheduling reply. The home server 100 generates the record password at the record scheduling reply.

Fig. 19 illustrates the content searching request command. To request the home server 100 to search for the content segment or a synthesized content, each client AV apparatus transmits, to the home server 100, the information processing apparatus ID of the client AV apparatus together with the content searching request command. In response to the transmission of the information processing apparatus ID, the home server 100 searches for the content segment transmitted from the client AV apparatus corresponding to that ID.

Content searching is requested in the cases as below. For example, in one case, the client AV apparatus 200 encrypts the content segment, and transmits the encrypted content segment to the home server 100 for recording. To disclose the recorded content segment, the home server 100 searches the content segments transmitted from the client AV apparatus 200 and recorded on the home server 100. In another case, each client AV apparatus plays back the synthesized content recorded on the home server 100. In such cases, the content searching request command is triggered.

If a content is synthesized from content segments transmitted by a particular client AV apparatus only, the information processing apparatus ID of that particular client AV apparatus is transmitted. To request the home server 100 to search disclosed content segments or contents synthesized from content segments transmitted from a plurality of client AV apparatuses, a particular character string (such as "0") is transmitted rather than the information processing apparatus ID.

Fig. 20 illustrates the content searching reply command. The home server 100 having received the content searching request command searches the contents in response to the request. The home server 100 extracts the content ID, the source information processing apparatus ID, the content start time, the content end time, the content size, the program name, the channel, the bit rate, the category, the comments of each of the searched contents, from the content management table. The home server 100 then transmits the data as a search content list together with the content searching reply command to each client AV apparatus. Each data is displayed in the list on the monitor display 41, and a user selects a particular content. If searching request is intended for a content synthesized content segments from a plurality of client AV apparatuses, no list is transmitted because the number of information processing apparatus IDs are not a single ID.

The operation of the home server 100 and the client AV apparatus in the AV network system thus constructed is described below.

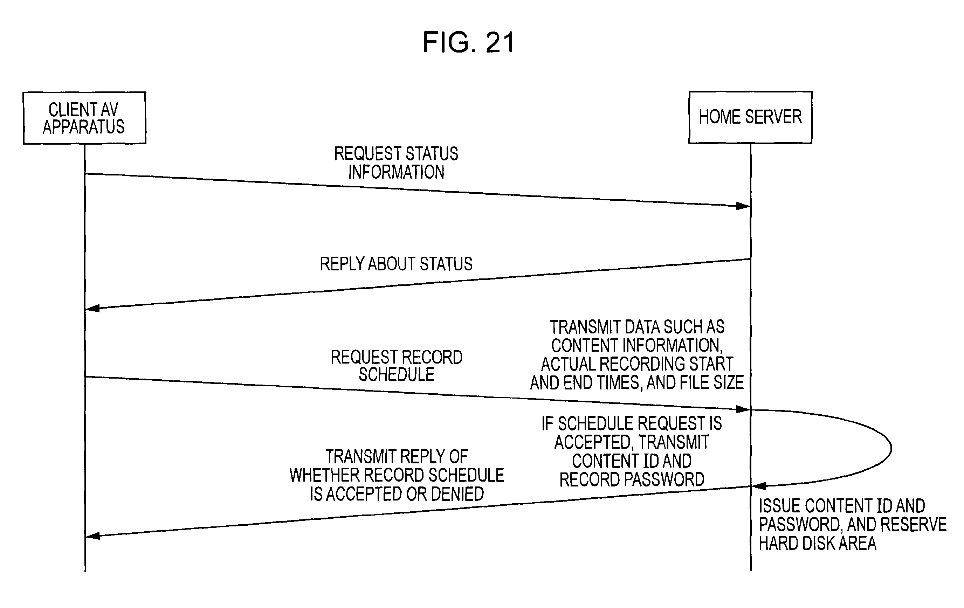

Each client AV apparatus requests the home server 100 to schedule the recording of the received content segment and the home server 100 actually records the content segment. This process is discussed first. Fig. 21 is a sequence diagram for record scheduling of the content segments.

As shown in Fig. 21, the client AV apparatus transmits the status request command to the home server 100 to determine that the home server 100 is correctly connected to the network and is normally operating. In response to the status request command, the home server 100 returns the status reply command to notify the client AV apparatus that the home server 100 is normally operating.

Upon receiving the status reply command, the client AV apparatus transmits, to the home server 100, the record scheduling request command together with data of the content start and end time, the content information such as the program name, the actual recording start time and end time, and the content size, and then requests the home server 100 to schedule recording of the content segments. In response to the record scheduling request, the home server 100 checks the available capacity of the HDD 28-1 to determine whether record scheduling is acceptable. If it is determined that the record scheduling is acceptable, the home server 100 reserves the storage capacity on the HDD 28-1 based on the content size. The home server 100 then issues the content ID and the record password, and transmits the record scheduling reply command, thereby notifying the client AV apparatus of the record scheduling permission, the content ID and the record password. If the record scheduling is not permitted, the home server 100 transmits the record scheduling reply command to notify that the record scheduling is not permitted. The home server 100 produces the entry of the content management table. The record scheduling of the content segment is thus completed.

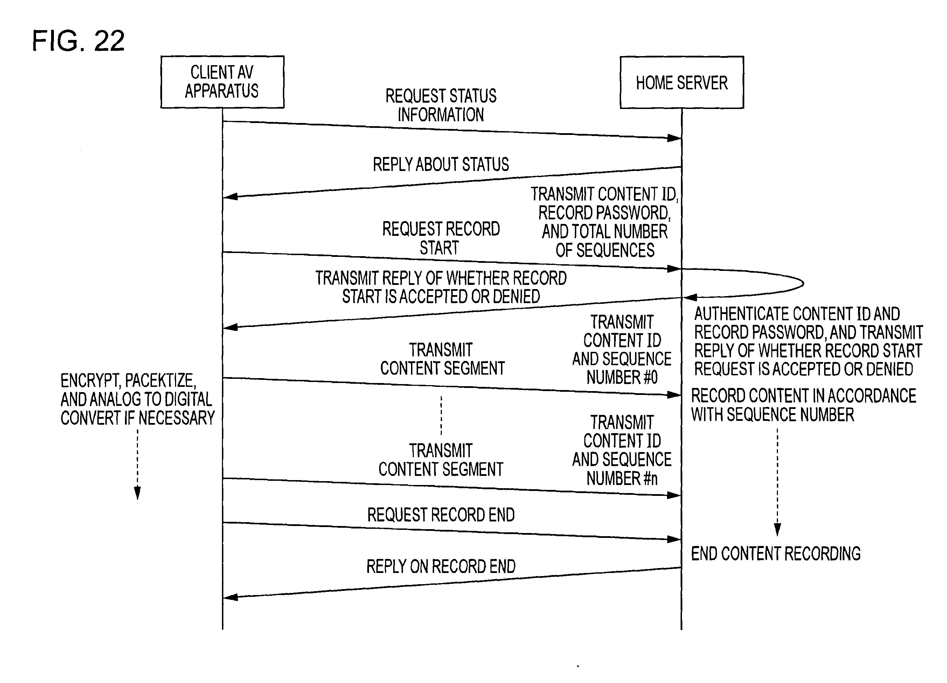

Fig. 22 is a sequence diagram illustrating the operation of actually recording the content segment in response to the record scheduling.

As shown, the client AV apparatus transmits the status request command to the home server 100, and checks the network connection and operational status of the home server 100 by referencing the status reply from the home server 100.

The client AV apparatus requests the home server 100 to start recording the record-scheduled content segment using the record start request command. As previously discussed, the client AV apparatus transmits data, received from the home server 100 at the reception of the record scheduling reply command, including the content ID, the password, and the total number of sequences of the content segment to be transmitted, to the home server 100.

The client AV apparatus receives the content segment while dividing the content segment by packet into sequences to be fitted into a single software cell. The client AV apparatus assign a sequence number to each sequence and transmits the sequences in the software cell to the home server 100. The total number of sequences is the total number of packets (software cells) calculated beforehand by the client AV apparatus from the bit rate.

Upon receiving the record start request command, the home server 100 authenticates the content ID and the password. If the content ID and the password are successfully authenticated, the home server 100 transmits the record start reply command to the client AV apparatus to notify the client AV apparatus of the record start permission. If the content ID and the password are not successfully authenticated, the home server 100 notifies the client AV apparatus that the record start is denied. The record start denial notice is displayed on the monitor display 41 of the client AV apparatus to notify the user so, and the recording process is suspended.

The client AV apparatus having received the record start permission stream receives the original content segment from a broadcasting station when the actual recording start time has come. The client AV apparatus encrypts the content segment on a real-time basis using the encryption and decryption programs. The client AV apparatus successively transmits, to the home server 100, the encrypted content segment together with the content ID and the sequence number in the software cell on a per packet basis. If the received content segment is a digital broadcast signal, a digital-to-analog conversion process is not required. If the received content segment is an analog broadcast signal, the content segment is converted into a digital format such as MPEG2 by an encoder, and then encrypted before transmission. The home server 100 records the received content segments on a packet-by-packet basis in accordance with the order of the sequence number. The home server 100 updates the items of the actual recording start time, the actual recording end time, the record content size, and the link to the actual content in the content management table.

When the packet transmitted reaches the final sequence number at the actual recording end time, the client AV apparatus transmits the recording end command to the home server 100, thereby requesting the home server 100 to end the recording of the content segment. In response to the request, the home server 100 transmits the recording end reply command, thereby ending the recording of the content segment.

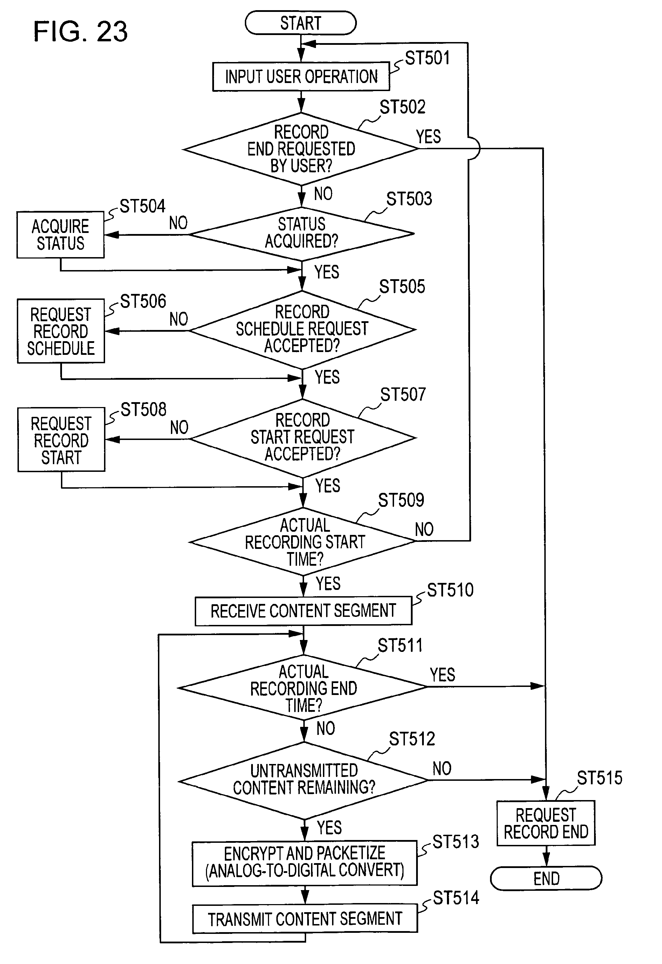

The above process is described further in detail. The operation of the client AV apparatus and the operation of the home server 100 are separately described below referring to a flowchart of Fig. 23. The flowchart of Fig. 23 illustrates the operation of the client AV apparatus during the record scheduling and recording of the content segment. The discussion of the operation of the client AV apparatus 200 referring to Fig. 23 is also applicable to the client AV apparatuses 300 and 400.

Upon receiving a user operation input from the operation input unit 37-2 (step S501), the client AV apparatus 200 determines in step S502 whether the operation input is a record end request. If it is in step S502 determined that the operation input is not a record end request, the client AV apparatus 200 determines in step S503 whether status information has been acquired from the home server 100. If it is determined in step S503 that the status information has not been acquired, the client AV apparatus 200 transmits the status request command to the home server 100 to acquire the status information (step S504).

If it is determined in step S503 that the status information has been acquired, the client AV apparatus 200 determines in step S505 whether the home server 100 has granted to the client AV apparatus 200 the record scheduling permission in response to the transmission of the record scheduling request command. If it is determined in step S505 that the record scheduling permission is not granted, the client AV apparatus 200 transmits the record scheduling request command to the home server 100 to receive the record scheduling permission (step S506).

If it is determined in step S505 that the record scheduling permission is granted in response to the record scheduling request command, the client AV apparatus 200 determines in step S507 whether the home server 100 has granted to the client AV apparatus the record start permission in response to the transmission of the record start request command. If it is determined in step S507 that the record start permission is not granted, the client AV apparatus transmits the record start command to the home server 100 to receive the record start permission (step S508).

If it is determined in step S507 that the record start permission is granted in response to the record start reply command, the client AV apparatus determines the actual recording start time of the content segment has come. If it is determined in step S509 that the actual recording start time has not come, processing returns to step S501 to wait for another user input operation. If it is determined in step S509 that the record start time has come, the client AV apparatus 200 stream receives the original content segment from the broadcasting station via one of the broadcast receiver 32-2, the video input unit 33-2, and the audio input unit 34-2 (step S510).

The client AV apparatus 200 determines in step S511 whether the actual recording end time has come. If it is determined in step S511 that the actual recording end time has not come, the client AV apparatus 200 determines in step S512 whether any untransmitted content segment remains. If it is determined in step S512 that an untransmitted content segment remains, the client AV apparatus 200 encrypts the received content segment using an encryption key (private key) that is encryptable by only the client AV apparatus 200. The client AV apparatus 200 packetizes the content segment in accordance with the capacity of the software cell (step S513), and transmits the resulting packet to the home server 100 (step S514).

The above process is repeated. When the actual recording end time has come (i.e., yes in step S511), or when all content segments are transmitted (i.e., no in step S512), the client AV apparatus 200 transmits the record end request command to request the home server 100 to end the recording of the content segment. Upon receiving the record end reply command, the client AV apparatus 200 ends the recording of the content segment (step S515). If it is determined in step S502 that the user input operation is the record end request, the client AV apparatus 200 also transmits the record end request command.

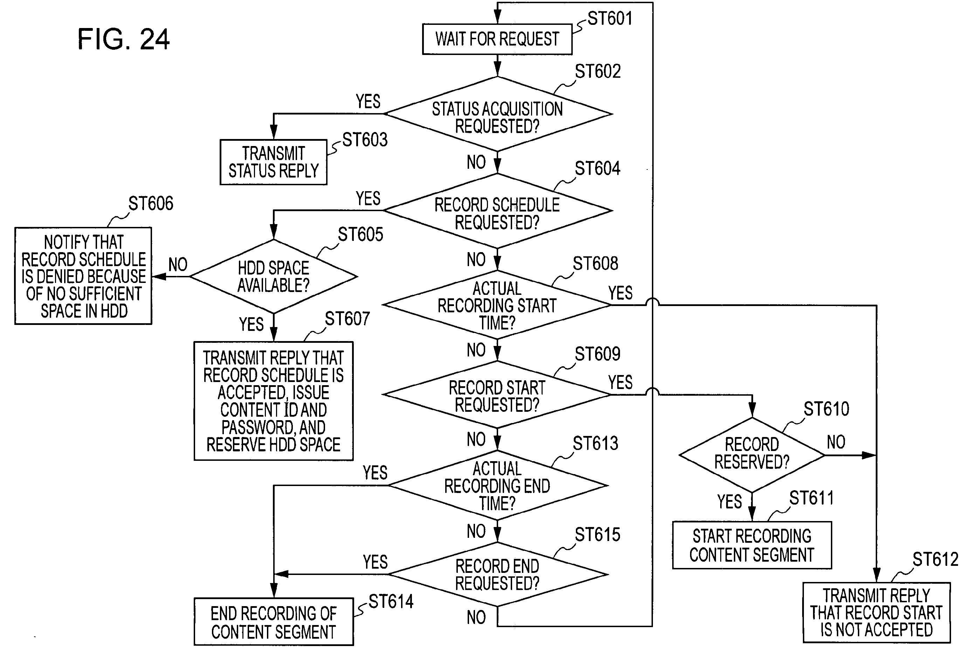

Fig. 24 is a flowchart illustrating the operation of the home server 100 during the record scheduling and recording of the content segment.

Upon receiving a request from each client AV apparatus (step S601), the home server 100 determines in step S602 whether the request is a status acquisition request. If it is determined in step S602 that the request is a status acquisition request, the home server 100 returns the status of own apparatus (step S603).

If it is determined in step S602 that the request is not a status request, the home server 100 determines in step S604 whether the request is a record scheduling request. If it is determined in step S604 that the request is a record scheduling request, the home server 100 determines in step S605 whether storage space is available on the HDD 28-1. If it is determined that storage space is available, the home server 100 transmits the record scheduling permission in the record scheduling reply command to the client AV apparatus and reserves storage space on the HDD 28-1. The home server 100 also issues the content ID and the password and transmits the content ID and password together with the record scheduling reply command (step S607). If space is insufficient on the HDD 28-1, the home server 100 notifies the client AV apparatus of the record scheduling denial in the record scheduling reply command (step S606).

The home server 100 references the content management table to determine whether the actual recording start time has come (step S608). If it is determined in step S608 that the actual recording start time has not yet come, the home server 100 determines in step S609 whether the request is a record start request. If it is determined in step S609 that the request is a record start request, the home server 100 determines in step S610 whether the content segment as a target of the record start request is scheduled to record in step S607, in other words, whether the content ID and password transmitted from the client AV apparatus are authenticated. If it is determined in step S610 that the content ID and password have been authenticated, the home server 100 starts recording the content segment onto the HDD 28-1 (step S611).

If it is determined in step S610 that the content ID and password have not been successfully authenticated or if it is determined in step S608 that the actual recording start time has come, the home server 100 transmits the record start denial in the record start reply command to the client AV apparatus (step S612).

If it is determined in step S609 that the request is not a record start request, the home server 100 determines in step S613 whether the actual recording end time has come. If it is determined in step S613 that the actual recording end time has not yet come, and if it is determined in step S615 that the request is the record end request, the home server 100 ends the recording of the content segment, and transmits a record end notice in the record end reply command to the client AV apparatus (step S614). If it is determined in step S615 that the request is not a record end request, processing returns to step S601 to wait for a request and repeat the above process in response to the request. The home server 100 repeats the above process in response to each request from the client AV apparatus, and records the content segment requested by each client AV apparatus.

With the above process, the home server 100 issues the content segment each time the record request of the content segment is received from each client AV apparatus. In response to the record scheduling, the home server 100 records each content segment, and easily learns which content each content segment belongs to.

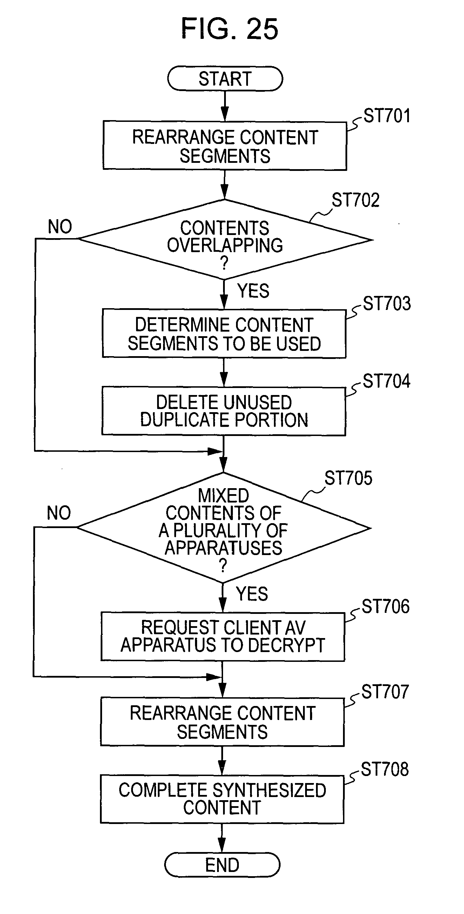

The operation of the home server 100 synthesizing the recorded content segments is described below with reference to a flowchart of Fig. 25.

When the content end time has come, the home server 100 references the content management table and rearranges the content segments having the same content ID, from among the recorded content segments, based on the actual recording start time and the actual recording end time of the content segments (step S701). The home server 100 references again the actual recording start time and the actual recording end time to determine whether overlapping portions are present in the rearranged content segments (step S702).

If there are overlapping portions, the home server 100 determines, based on a predetermined priority order, which overlapping portions of the content segments to use (step S703). The predetermined priority order is determined based on consistency of the synthesized content files. More specifically, if other content segments from the same client AV apparatus are present, those content segments are selected with priority so that the ratio of the content segments transmitted from the same client AV apparatus in the synthesized content becomes high. The overlapping portions of the other content segments are deleted. The format and the bit rate of each content segment may serve as priority criteria. For example, MPEG 2 format files can have higher priority than MPEG 1 format files. Higher bit rate files can have higher priority than lower bit rate files.

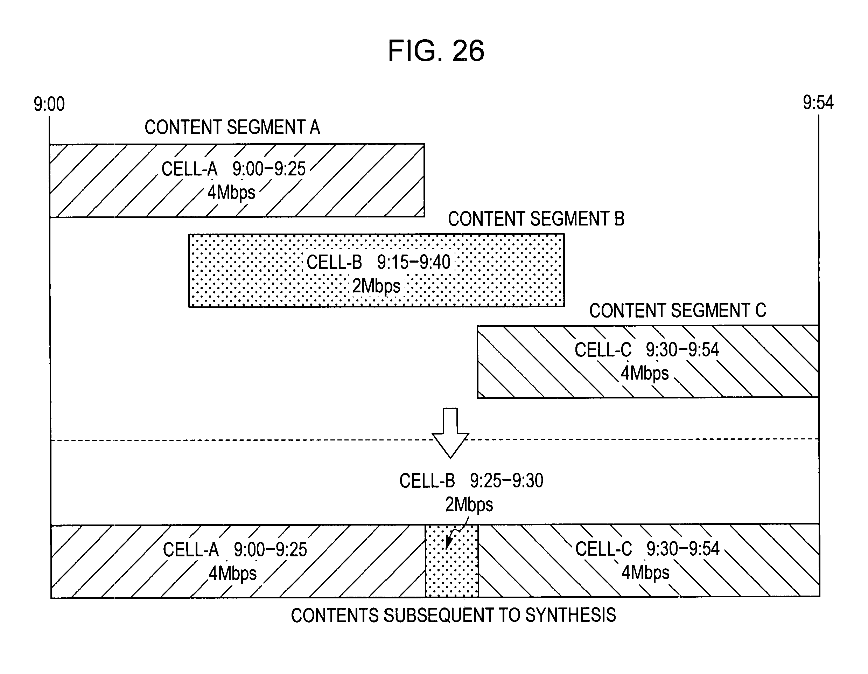

Fig. 26 illustrates a synthesis method applicable when overlapping portions are present among content segments. As shown, of the program from 9:00 to 9:45, the client AV apparatus 200 (information processing apparatus ID =CELL-A) receives a content segment A from 9:00 to 9:25, the client AV apparatus 300 (information processing apparatus ID =CELL-B) receives a content segment B from 9:15 to 9:40, and the client AV apparatus 400 (information processing apparatus ID =CELL-C) receives a content segment C from 9:30 to 9:45. These client AV apparatuses transmit the respective content segments to the home server 100 for recording. The bit rate of the content segment A and the content segment C is 4 Mbps while the bit rate of the content segment C is 2 Mbps.

The content segment A and the content segment B overlap each other from 9:15 to 9:25, and the content segment B and the content segment C overlap each other from 9:30 to 9:40. Of the overlap portion between the content segment A and the content segment B, the overlap portion of the content segment A having a higher bit rate is adopted in the priority order of the bit rate while the overlap portion of the content segment B is deleted. Of the overlap portion between the content segment B and the content segment C, the overlap portion of the content segment C is adopted while the overlap portion of the content segment B is deleted.

A time slot having no transmission from any client AV apparatus within the single broadcast program is left as is (without any data). If each client AV apparatus does not transmit a portion of a commercial in the broadcast time of the program, commercial cutting is performed. If no overlapping portions are present in step S702 (i.e., no in step S702), processing proceeds to step S705.

If unused overlapping portions are deleted in accordance with the priority order (step S704 of Fig. 25), the home server 100 determines in step S705 whether content segments are transmitted from a plurality of client AV apparatuses. If the content segments are transmitted from the plurality of client AV apparatuses (i.e., yes in step S705), any client AV apparatus cannot play back the synthesized content because each client AV apparatus has decrypted the respective content segment. For this reason, the home server 100 requests each client AV apparatus to decrypt the respective content segment using the decryption request command (step S706) The decryption operation is described below.

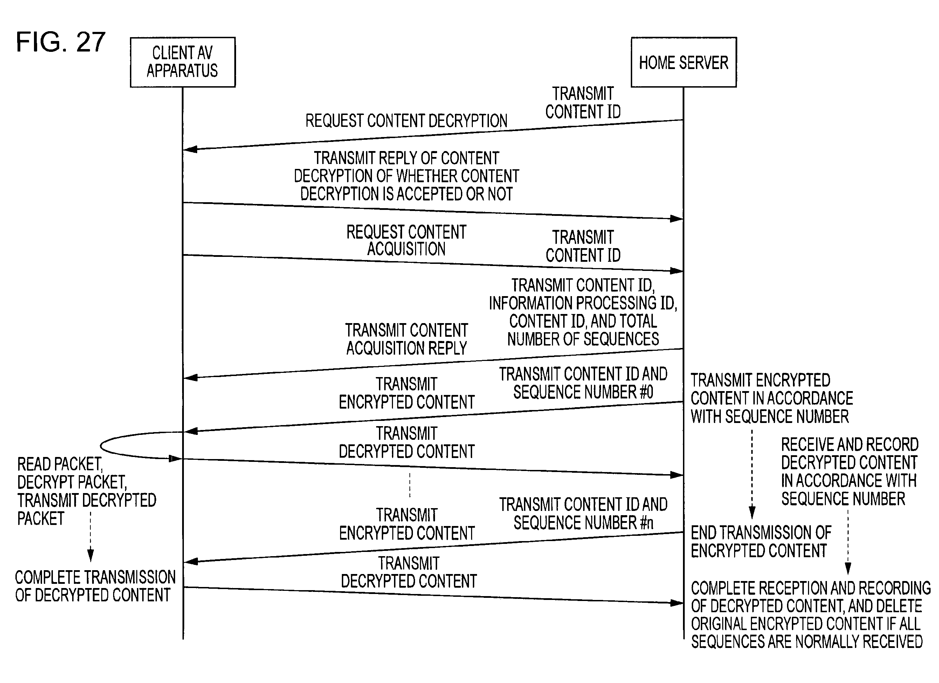

Fig. 27 illustrates the operation of the home server 100 and the client AV apparatus decrypting the content segment.

If the home server 100 determines that the content segments having the same content ID are transmitted from a plurality of client AV apparatuses, the home server 100 transmits the content decryption request command together with the content IDs to the client AV apparatuses having encrypted the content segments to request the client AV apparatuses to decrypt the content segments. Each client AV apparatus determines from the received content ID whether the content segment has been encrypted by own apparatus. If the decryption is possible, the client AV apparatus transmits a decryption permission notice in a content decryption reply command to the home server 100. If the decryption is not possible, the client AV apparatus transmits a decryption denial notice in the decryption reply command to the home server 100.

If the decryption is possible, the client AV apparatus transmits the content ID together with the content acquisition request command, thereby requesting the home server 100 to acquire the content segment as a decryption target. In response to the acquisition request, the home server 100 references the content management table based on the content ID to search for the content segment. The home server 100 transmits, in the content acquisition reply command, the information processing apparatus ID of the client AV apparatus as the source of the content segment obtained as a result of search, the content ID, and the content segment together with data of the total number of sequences to be transmitted on a per packet basis. The home server 100 thus notifies the client AV apparatus that acquisition is possible.

The home server 100 transmits, to the client AV apparatus, the encrypted content segment together with the content ID and the sequence number in the software cell on a per packet basis. Upon receiving the packet of the content segment, the client AV apparatus reads the packet, decrypts the content segment with own private key, and transmits the decrypted content segment (clear text) to the home server 100. The above process is repeated by the total number of sequences.

The home server 100 successively records the received decrypted content segments onto the HDD 28-1 in accordance with the sequence. When all sequences are normally received and recorded, the original encrypted content segments are deleted. The disclosure flag of the content segment is set from 0 to 1 in the content management table. The home server 100 causes the client AV apparatus to decrypt the plurality of content segments having the same content ID in the above process, and then records the decrypted content segments.

The home server 100 causes the client AV apparatuses to decrypt the respective content segments forming a single program, and records the decrypted content segments. The home server 100 rearranges the content segments in time sequence order based on the actual recording start time and the actual recording end time in the content management table (step S707 of Fig. 25). The home server 100 sets the link to each content segment, produces a time sequence link list, and sets the disclosure flag of the entire content from 0 to 1 in the content management table. The home server 100 thus releases the link list as a synthesized content (step S708). If it is determined in step S705 that the contents are not a mix of contents of a plurality of apparatuses, in other words, if it is determined in step S705 that the content segments forming a single program are transmitted from the same client AV apparatus, the home server 100 rearranges the content segments in the encrypted form thereof in the time sequence order, produces the link list, and releases the synthesized content with the disclosure flag remaining at 0.

In this way, the home server 100 rearranges the content segments, transmitted non-continuously from a single client AV apparatus or a plurality of client AV apparatuses, in the time sequence order based on the actual recording start time and the actual recording end time, and deletes overlapping portions as appropriate in the predetermined priority order. The home server 100 thus produces the synthesized content. The content segments received by the plurality of client AV apparatuses are thus recorded without paying attention to the overlapping portions, and the system redundancy is assured. For example, a program is received by a low bit rate client AV apparatus throughout the whole period of the program, and then recorded onto the home server 100. The same program is received by a high bit rate client AV apparatus as long as possible and recoded onto the home server 100. The home server 100 later synthesizes the recorded programs later to enhance total image quality of the contents.

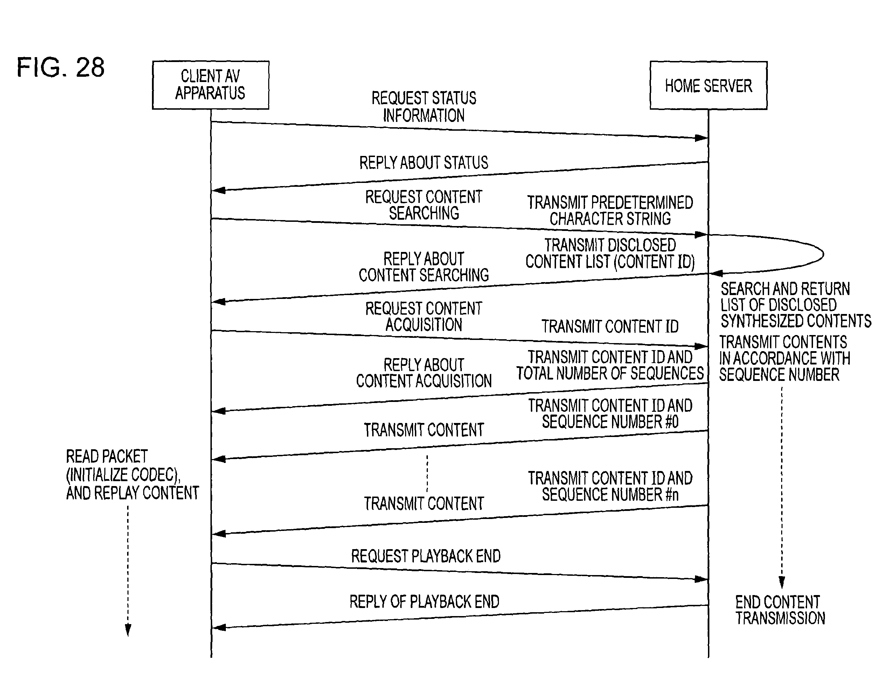

The operation of the client AV apparatus playing back the synthesized content is described below. Fig. 28 is a sequence diagram illustrating the operation of the client AV apparatus and the home server 100. The client AV apparatus 200 here plays back the content that is synthesized from content segments from a plurality of client AV apparatuses including own apparatus.

As shown in Fig. 28, the client AV apparatus 200 transmits the status request command to the home server 100, and examines the network connection and operational status of the home server 100 in response to the status reply from the home server 100. The client AV apparatus 200 transmits, to the home server 100, the content searching request command discussed with reference to Fig. 19, and requests the home server 100 to search for replayable content segments. In this case, the client AV apparatus 200 transmits a character string (0, for example) representing that the request is a searching request for a disclosed synthesized content.

The home server 100 having received the search request references the content management table, searches for a synthesized content segment with the disclosure flag of the entire content being "1", and transmits a list of searched content segments together with data of the content ID and the like in the content searching reply command as previously discussed with reference to Fig. 20.

The client AV apparatus 200 having received the list of the synthesized contents displays the list on the monitor display 41, causes the user to select a content on the operation input unit 37-2, and transmits the acquisition request of the selected synthesized content together with the content ID in the content acquisition request command.

The home server 100 having received the content acquisition request returns, as the content acquisition reply command, the content ID and the total number of sequences by which the synthesized content corresponding to the content ID is transmitted on a per packet basis. In succession, the home server 100 retrieves the synthesized content from the HDD 28-1, and transmits, to the client AV apparatus 200, the synthesized content in a software cell on a per packet basis in accordance with the sequence number.

The client AV apparatus 200 receives the synthesized content on a per packet basis, reads the packet and plays back the synthesized content in accordance with the sequence number. If the content segments forming the synthesized content are different in format and bit rate, a required process such as initialization of codec is performed on a per content segment basis.

Upon completing the playback of the synthesized content of the packet having the final sequence number, the client AV apparatus 200 transmits a playback end command to the home server 100, thereby notifying the home server 100 of the end of the playback. The home server 100 ends the playback of the synthesized content by returning a playback end reply command in response to the playback end request command.

To play back a non-disclosed content synthesized from the content segments transmitted from all client AV apparatuses, the client AV apparatus 200 transmits the information processing apparatus ID thereof to request content searching. In response to the information processing apparatus ID, the home server 100 searches the synthesized content corresponding to the client AV apparatus 200, and transmits the list of the synthesized contents. Based on the list, the client AV apparatus 200 specifies the content ID of a desired content in the list, and requests the acquisition of the synthesized content. In response to the request, the home server 100 transmits the synthesized content to the client AV apparatus 200. The client AV apparatus 200 decrypts the received synthesized content with the private key thereof, and plays back the synthesized content. Security over the network 9 is maintained if secrecy of the content is important.

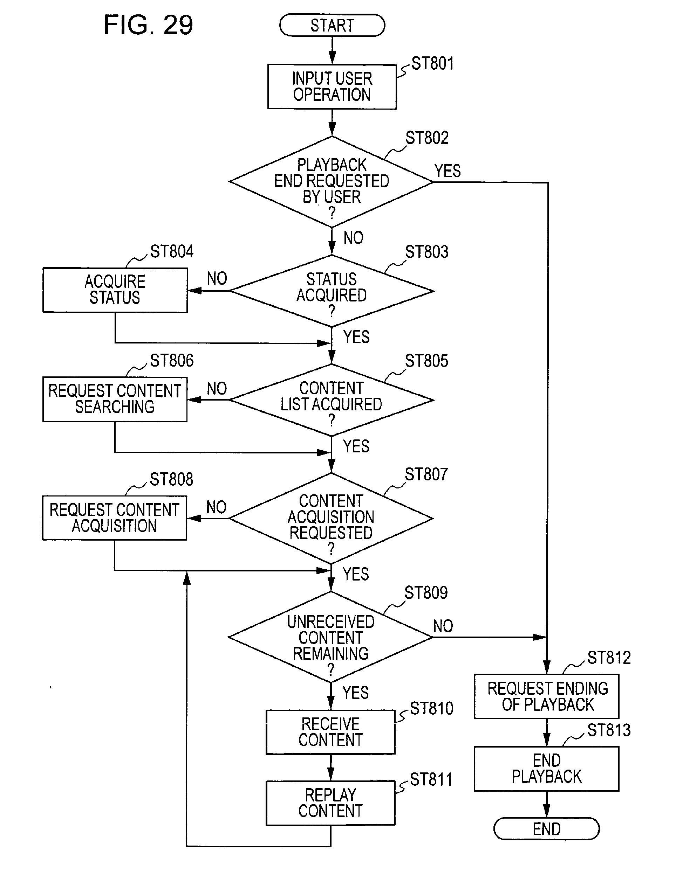

Fig. 29 is a flowchart of the operation of the client AV apparatus playing back the synthesized content.

In response to the user operation input via the operation input unit (step S801), the client AV apparatus determines in step S802 whether the operation input is a playback request. If it is determined in step S802 that the operation input is not a playback request, the client AV apparatus determines in step S803 whether the status has been acquired from the home server 100. If it is determined in step S803 that the status has not been acquired, the client AV apparatus transmits a status request command to acquire the status from the home server 100 (step S804).

If it is determined in step S803 that the status has been acquired, the client AV apparatus determines in step S805 whether the content list has been acquired. If it is determined in step S805 that the content list has not been acquired, the client AV apparatus transmits the content searching request command to the home server 100, and acquires the content list containing the content ID by receiving the content searching reply command (step S806).

If it is determined in step S805 that the content list has been acquired, the client AV apparatus determines in step S807 whether the synthesized content acquisition has been requested. If it is determined in step S807 that the synthesized content acquisition has not been requested, the client AV apparatus specifies the content ID of the synthesized content desired by the user, transmits the content acquisition request command to the home server 100, and receives the content acquisition reply command.

If it is determined in step S807 that the content acquisition has been requested, the client AV apparatus checks in step S809 whether an unreceived synthesized content is present. If it is determined in step S809 that an unreceived synthesized content is present, the client AV apparatus receives the synthesized content on a per packet basis in accordance with the sequence number in the procedure discussed with reference to Fig. 28 (step S810). The client AV apparatus reads the packet of the received synthesized content and plays back the synthesized content (step S811). If the received synthesized content is the one synthesized from content segments from a plurality of client AV apparatuses and is different in format or bit rate on a per content segment basis, a required process such as initialization of codec is performed. If the content is synthesized from content segments from only own apparatus and is non-disclosed, the client AV apparatus decrypts the synthesized content with the private key thereof, and then plays back the synthesized content.

Upon completing receiving and playing back all packets of the synthesized content, the client AV apparatus transmits the playback end request command to the home server 100 (step S812), and ends playback (step S813). If it is determined in step S802 that the user operation input is a playback end request, the client AV apparatus also transmits the playback end request command to end playback.

Content segments, received by a single client AV apparatus or a plurality of client AV apparatuses, are synthesized by the home server 100. The synthesized content is then played back by specifying the content ID. Even if the content segments are different in format or bit rate, playback is performed taking into consideration such differences.

From among synthesized contents, a non-disclosed content, synthesized from a plurality of content segments transmitted from only a single client AV apparatus, cannot be played back by another client AV apparatus. In accordance with the present embodiment, such a non-disclosed content can be disclosed so that the non-disclosed content is played back by any other client AV apparatus. The operation of the home server 100 and the client AV apparatus disclosing the content is described below.

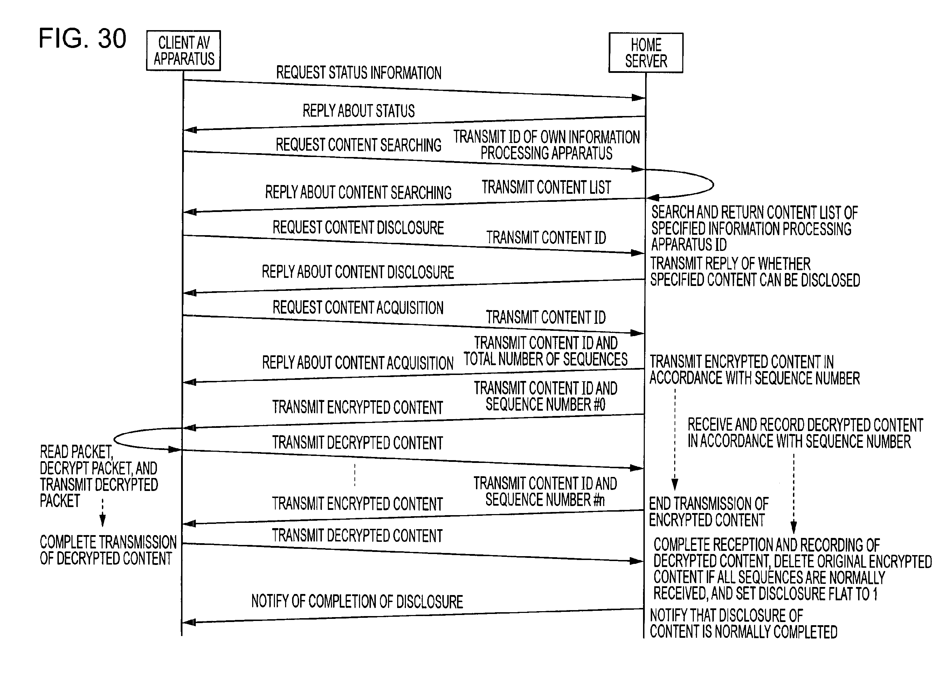

Fig. 30 is a sequence diagram of the operation of the home server 100 and the client AV apparatus disclosing the synthesized content.

As shown, the client AV apparatus transmits beforehand the status request command to the home server 100 and checks the network connection and operational status of the home server 100 by referencing the status reply from the home server 100. If the user inputs a disclosure request of the synthesized content via the operation input unit, the client AV apparatus transmits the content searching request command together with the information processing apparatus ID of own apparatus to the home server 100.

Upon receiving the content searching request command, the home server 100 references the content management table in response to the information processing apparatus ID, searches a synthesized content synthesized from recorded content segments transmitted from the client AV apparatus corresponding to the information processing apparatus ID, and transmits the synthesized content list in the content searching reply command.

Upon receiving the searching request, the client AV apparatus presents the list to the user by displaying the list on the monitor display 41. Via the operation input unit, the user specifies the synthesized content the user desires to disclose. The client AV apparatus transmits the disclosure request of the specified synthesized content together with the content ID in the content acquisition request command.

When the content disclosure request is received, the home server 100 references the content management table for the synthesized content in response to the content ID. If a synthesized content matching the content ID is present, the home server 100 transmits a disclosure permission notice in the content disclosure reply command to the client AV apparatus.

When the content disclosure reply command is received, the client AV apparatus transmits the content acquisition request command together with the content ID and requests the home server 100 to acquire the synthesized content. In response to the acquisition request, the home server 100 transmits, to the client AV apparatus, the corresponding synthesized content together with the total number of sequences transmitted on a per packet basis, in the content acquisition reply command.

The home server 100 retrieves the corresponding synthesized content from the HDD 28-1, and transmits, to the client AV apparatus, the synthesized content in the software cell on a per packet basis in accordance with the sequence number. Each time the packet is received, the client AV apparatus reads the packet, decrypts the synthesized content of the packet using the private key thereof, and transmits the synthesized content to the home server 100.

Each time the packet of the decrypted synthesized content (in clear text) is received, the home server 100 records the synthesized content in accordance with the sequence number onto the HDD 28-1. When the received packet of the synthesized content reaches the final sequence number, the synthesized content is written onto the HDD 28-1, and the recorded encrypted synthesized content is then deleted. The disclosure flags of the entire content and the content segments are set from 0 to 1 in the content management table. Data relating to the link to the actual content is also updated.

A content synthesized from content segments transmitted from only a single client AV apparatus can be played back by another client AV apparatus. Since the synthesized content is decrypted and disclosed in response to the request from the client AV apparatus having encrypted the synthesized content, the synthesized content is prevented from being arbitrarily disclosed.

In the AV network system, the functions of receiving and recording of the content are split between the client AV apparatus and the home server 100. The home server 100 synthesizes content segments, received by a single client AV apparatus or a plurality of client AV apparatuses, into a single content, and records and manages the single content. The synthesized content can be played back on any client AV apparatus.

The present invention is not limited to the above-referenced embodiments, and a variety of changes and modifications are possible without departing from the scope of the present invention.

In the above-referenced embodiments, the home server records the contents. The apparatus recording the contents are not limited to such a local server. For example, the Internet is used as the network 9 and a global service server over the Internet can record the contents. In this case, each client AV apparatus can be located anywhere as long as the client AV apparatus is connected to the network 9. The client AV apparatus can be a mobile one rather than a stationary one.

If a wide-area network such as the Internet is used, each client AV apparatus includes area data, contained in the EPG data received by itself, into data of the record scheduling request command. The home server 100 can reference the area data in the assignment of the content ID. Depending on location, the program in the same time slot may have different channel name (broadcasting station name).

In accordance with the above-referenced embodiments, the home server 100 records the contents, and each client AV apparatus receives the content segment and causes the home server 100 to record the received contents, and plays back the content. The processes are split between the home server 100 and each client AV apparatus. Optionally, all apparatuses can have the functions of both the home server 100 and the client AV apparatus. Each apparatus then flexibly performs the functions using the capability interchanging program and the like.

In accordance with the above-referenced embodiments, the content segments of the same program are assigned the same content ID. The content IDs are not necessarily identical to each other as long as the content segments are associated and then synthesized into a single content.

It should be understood by those skilled in the art that various modifications, combinations, sub-combinations and alterations may occur depending on design requirements and other factors insofar as they are within the scope of the appended claims or the equivalents thereof.

## Claims

1. A content recording apparatus for communicating with a content playback apparatus via a network, the content recording apparatus comprising:
first receiving means for receiving, from the content playback apparatus, information related to a content segment to be received by the content playback apparatus, the content segment being a portion of a single content;
attaching means for attaching, to the content segment, a content identification identifying the content segment based on the received related information;
second receiving means for receiving, from the content playback apparatus, the content segment received by the content playback apparatus;
recording means for recording the received content segment with both the content identification and the related information associated with the received content segment; and
synthesizing means for synthesizing, into the single content, content segments having the same content identification from among a plurality of content segments if the plurality of content segments are recorded.

2. The content recording apparatus according to claim 1, further comprising first transmitting means for transmitting the single synthesized content to the content playback apparatus for playback.

3. The content recording apparatus according to claim 2, further comprising:
second transmitting means for transmitting the attached content identification to the content playback apparatus; and
third receiving means for receiving, from the content playback apparatus, a transmission request to transmit the single synthesized content, together with the content identification,
wherein the second transmitting means transmits the single content corresponding to the received identification in response to the transmission request.

4. The content recording apparatus according to claim 1, wherein the second receiving means receives the content segment from a plurality of content playback apparatuses, and
wherein the synthesizing means comprises:
a unit for determining, based on the related information corresponding to each recorded content segment, whether overlapping portions are present among the content segments; and
a unit for deleting the overlapping portions of the other content segments with the overlapping portion on one content segment selected if the determining unit determines that the overlapping portions are presented among the content segments.

5. The content recording apparatus according to claim 4, wherein the synthesizing means comprises a unit for prioritizing the overlapping portions in the deletion of the overlapping portions based on the related information of the content segments having the overlapping portions.

6. The content recording apparatus according to claim 1, wherein the second receiving means receives the content segment encrypted by the content playback apparatus, and
wherein the synthesizing means comprises:
a unit for transmitting the content segment to the content playback apparatus having encrypted the content segment to decrypt the content segments having the same content identification attached thereto;
a unit for receiving, from the content playback apparatus, the content segment decrypted by the content playback apparatus, to update the encrypted content segment to the decrypted content segment; and
a unit for synthesizing the decrypted content segments.

7. The content recording apparatus according to claim 5, wherein the single content is a program transmitted in a predetermined time slot,
wherein the related information contains information related to an area where the program is broadcast, information related to a channel in which the program is broadcast, information related to broadcast start time and broadcast end time of the program, and information related to reception start time and reception end time of each content segment that is received as a portion of the program by each content playback apparatus,
wherein the generating means generates the content ID based on the area information, the channel information, the broadcast start time, and the broadcast end time,
wherein the synthesizing means synthesizes the content segments in time sequence based on the reception start time and the reception end time of the content segments if the broadcast end time of the single content has come.

8. A content playback apparatus for communicating with a content recording apparatus via a network, the content playback apparatus comprising:
acquisition means for acquiring information related to a content segment to be received as a portion of a single content;
first transmitting means for transmitting the acquired related information to the content recording apparatus;
first receiving means for receiving, from the content recording apparatus, a content identification that is attached to the content segment by the content recording apparatus based on the related information;
second receiving means for receiving the content segment;
second transmitting means for transmitting, to the content recording apparatus, the received content segment together with the content identification to be recorded onto the content recording apparatus;
third transmitting means for transmitting, to the content recording apparatus, a transmission request to transmit a single synthesized content, together with the content identification if a plurality of content segments are recorded on the content recording apparatus and synthesized into the single content;
third receiving means for receiving the single content that is transmitted from the content recording apparatus in response to the transmission request; and
playback means for playing back the received signal content.

9. The content playback apparatus according to claim 8, further comprising means for encrypting the content segment received by the second receiving means,
wherein the second transmitting means transmits the encrypted content segment, and
wherein the playback means plays back the single content by decrypting the single content.

10. The content playback apparatus according to claim 8, further comprising: means for encrypting the content segment received by the second receiving means, the second transmitting means transmitting the encrypted content segment;
means for receiving, from the content recording apparatus, a decryption request to decrypt a recorded content segment, together with the content segment if the content recording apparatus records the transmitted content segment together with another content segment transmitted from another content playback apparatus connected to the network; and
means for decrypting the content segment in response to the decryption request and returning the decrypted content segment to the content recording apparatus.

11. The content playback apparatus according to claim 8, wherein the single content is a program transmitted in a predetermined time slot, and
wherein the related information contains information related to an area where the program is broadcast, information related to a channel in which the program is broadcast, information related to broadcast start time and broadcast end time of the program, and information related to reception start time and reception end time of each content segment that is received as a portion of the program by each content playback apparatus.

12. A system comprising a content recording apparatus, a first content playback apparatus, and a second content playback apparatus, the apparatuses connected to each other via a network for communication,
wherein the content recording apparatus comprises means for receiving, from each of the first and second content playback apparatuses, information related to a content segment to be received by each of the first and second playback apparatuses, the content segment being a portion of a single content, means for attaching, to the content segment, a content identification identifying the content segment based on the received related information, and transmitting the content identification to each of the first and second content playback apparatuses, means for receiving, from each of the first and second content playback apparatuses, the content segment received by each of the first and second content playback apparatuses, means for recording the received content segment with both the content identification and the related information associated with the received content segment, means for synthesizing, into the single content, content segments having the same content identification from among the recorded content segments, and means for transmitting the single synthesized content to each of the first and second content playback apparatuses; and
wherein each of the first and second content playback apparatuses comprises means for acquiring the related information, means for transmitting the acquired related information to the content recording apparatus, means for receiving the content identification from the content recording apparatus, means for receiving the content segment, means for transmitting the received content segment together with the content identification to the content recording apparatus, means for transmitting, to the content recording apparatus, the transmission request of the single synthesized content together with the content identification, means for receiving the single content that is transmitted from the content recording apparatus in response to the transmission request, and means for playing back the single received content.

13. A content recording method of a content recording apparatus communicating with a content playback apparatus via a network, the content recording method comprising steps of:
receiving, from the content playback apparatus, information related to a content segment to be received by the content playback apparatus, the content segment being a portion of a single content;
attaching, to the content segment, a content identification identifying the content segment based on the received related information;
receiving, from the content playback apparatus, the content segment received by the content playback apparatus;
recording the received content segment with both the content identification and the related information associated with the received content segment; and
synthesizing, into the single content, content segments having the same content identification from among a plurality of content segments if the plurality of content segments are recorded.

14. A content playback method of a content playback apparatus communicating with a content recording apparatus via a network, the content playback method comprising steps of:
acquiring information related to a content segment to be received as a portion of a single content;
transmitting the acquired related information to the content recording apparatus;
receiving, from the content recording apparatus, a content identification that is attached to the content segment by the content recording apparatus based on the related information;
receiving the content segment;
transmitting, to the content recording apparatus, the received content segment together with the content identification to be recorded onto the content recording apparatus;
transmitting, to the content recording apparatus, a transmission request to transmit a single synthesized content, together with the content identification if a plurality of content segments are recorded on the content recording apparatus and synthesized into the single content;
receiving the single content that is transmitted from the content recording apparatus in response to the transmission request; and
playing back the received signal content.

15. A computer program for causing a content recording apparatus to communicate with a content playback apparatus via a network, the computer program comprising program code for performing steps of:
receiving, from the content playback apparatus, information related to a content segment to be received by the content playback apparatus, the content segment being a portion of a single content;
attaching, to the content segment, a content identification identifying the content segment based on the received related information;
receiving, from the content playback apparatus, the content segment received by the content playback apparatus;
recording the received content segment with both the content identification and the related information associated with the received content segment; and
synthesizing, into the single content, content segments having the same content identification from among a plurality of content segments if the plurality of content segments are recorded.

16. A computer program for causing a content playback apparatus to communicate with a content recording apparatus via a network, the computer program comprising program code for performing steps of:
acquiring information related to a content segment to be received as a portion of a single content;
transmitting the acquired related information to the content recording apparatus;
receiving, from the content recording apparatus, a content identification that is attached to the content segment by the content recording apparatus based on the related information;
receiving the content segment;
transmitting, to the content recording apparatus, the received content segment together with the content identification to be recorded onto the content recording apparatus;
transmitting, to the content recording apparatus, a transmission request to transmit a single synthesized content, together with the content identification if a plurality of content segments are recorded on the content recording apparatus and synthesized into the single content;
receiving the single content that is transmitted from the content recording apparatus in response to the transmission request; and
playing back the received signal content.

17. A content recording apparatus for communicating with a content playback apparatus via a network, the content recording apparatus comprising:
a first receiver receiving, from the content playback apparatus, information related to a content segment to be received by the content playback apparatus, the content segment being a portion of a single content;
an attaching unit attaching, to the content segment, a content identification identifying the content segment based on the received related information;
a second receiver receiving, from the content playback apparatus, the content segment received by the content playback apparatus;
a recorder recording the received content segment with both the content identification and the related information associated with the received content segment; and
a synthesizer synthesizing, into the single content, content segments having the same content identification from among a plurality of content segments if the plurality of content segments are recorded.

18. A content playback apparatus for communicating with a content recording apparatus via a network, the content playback apparatus comprising:
an acquisition unit acquiring information related to a content segment to be received as a portion of a single content;
a first transmitter transmitting the acquired related information to the content recording apparatus;
a first receiver receiving, from the content recording apparatus, a content identification that is attached to the content segment by the content recording apparatus based on the related information;
a second receiver receiving the content segment;
a second transmitter transmitting, to the content recording apparatus, the received content segment together with the content identification to be recorded onto the content recording apparatus;
a third transmitter transmitting, to the content recording apparatus, a transmission request to transmit a single synthesized content, together with the content identification if a plurality of content segments are recorded on the content recording apparatus and synthesized into the single content;
a third receiver receiving the single content that is transmitted from the content recording apparatus in response to the transmission request; and
a playback unit playing back the received signal content.

19. A system comprising a content recording apparatus, a first content playback apparatus, and a second content playback apparatus, the apparatuses connected to each other via a network for communication,
wherein the content recording apparatus comprises a unit receiving, from each of the first and second content playback apparatuses, information related to a content segment to be received by each of the first and second playback apparatuses, the content segment being a portion of a single content, a unit attaching, to the content segment, a content identification identifying the content segment based on the received related information, and transmitting the content identification to each of the first and second content playback apparatuses, a unit receiving, from each of the first and second content playback apparatuses, the content segment received by each of the first and second content playback apparatuses, a unit recording the received content segment with both the content identification and the related information associated with the received content segment, a unit synthesizing, into the single content, content segments having the same content identification from among the recorded content segments, and a unit transmitting the single synthesized content to each of the first and second content playback apparatuses; and
wherein each of the first and second content playback apparatuses comprises a unit acquiring the related information, a unit transmitting the acquired related information to the content recording apparatus, a unit receiving the content identification from the content recording apparatus, a unit receiving the content segment, a unit transmitting the received content segment together with the content identification to the content recording apparatus, a unit transmitting, to the content recording apparatus, the transmission request of the single synthesized content together with the content identification, a unit receiving the single content that is transmitted from the content recording apparatus in response to the transmission request, and a unit playing back the single received content.
